# EUROPEAN PATENT SPECIFICATION

(11) **EP 4 657 093 B1**
(45) Date of publication and mention of the grant of the patent: **25.11.2026**
(21) Application number: 25153334.5
(22) Date of filing: 22.01.2025
(51) Int. Cl.: G01R 31/367, G01R 31/385, H01M 10/42, H01M 10/48

(54) **CELL SAFETY PREDICTION METHOD, APPARATUS, DEVICE, AND MEDIUM**
VERFAHREN, VORRICHTUNG, GERÄT UND MEDIUM ZUR VORHERSAGE DER ZELLSICHERHEIT
PROCÉDÉ, APPAREIL, DISPOSITIF ET SUPPORT DE PRÉDICTION DE SÉCURITÉ DE CELLULE

(30) Priority: 29.05.2024 CN 202410684615
(43) Date of publication of application: 03.12.2025
(73) Proprietor: Beijing Hyperstrong Technology Co., Ltd., Beijing 100094 (CN)
(72) Inventor: TANG, Kexin, Beijing, 100094 (CN); CHEN, Yuanlu, Beijing, 100094 (CN); WANG, Lei, Beijing, 100094 (CN); YANG, Guang, Beijing, 100094 (CN)
(74) Representative: J A Kemp LLP

(56) References cited:
- CN-A- 110 764 004
- CN-A- 115 828 541
- CN-A- 116 953 551
- CN-A- 117 129 869
- HOELLE S. ET AL: "3D Thermal Simulation of Thermal Runaway Propagation in Lithium-Ion Battery Cell Stack: Review and Comparison of Modeling Approaches", JOURNAL OF THE ELECTROCHEMICAL SOCIETY, vol. 170, no. 060516, 7 June 2023 (2023-06-07), pages 1 - 18, XP093290970

## Description

### TECHNICAL FIELD

The present application relates to the technology of battery test, and more particularly relates to a cell safety prediction method, apparatus, device and medium.

### BACKGROUND

Batteries and energy storage system products need to be subjected to overcharging test to verify the safety performance thereof. By reasonably designing the batteries and battery packs, thermal runaway that may be caused by the overcharging of batteries can be avoided, thus reducing the occurrence of fire or explosion that seriously affects the safety.

Whether the thermal runaway occurs when the battery pack is overcharged is related to the overcharging performance of a single cell and the structural design of the battery pack. Before the actual test on the overcharging of the battery pack, the overcharging performance of the battery pack can be estimated, and if an estimation result shows that the battery pack has high risk of thermal runaway, the design can be adjusted in time, which can reduce the material cost and time cost of trial and error using actual materials, and is beneficial for improving the research and development efficiency.

However, the current estimation solution requires to accurately obtain material compositions and reaction situation for modeling, and a corresponding system structure is complex, resulting in low estimation efficiency. Therefore, a cell safety prediction method is needed to simplify the cell safety prediction system and improve the efficiency in the prediction of the cell safety.

CN115828541A discloses a lithium ion battery protection design method based on thermal runaway spread simulation. According to the lithium ion battery protection design method based on thermal runaway spreading simulation, thermal runaway protection design is improved through the provided detection, modeling and simulation processes, spreading of battery thermal runaway can be effectively avoided, and the safety of a battery system, a vehicle and even a person is protected. According to the method, a simulation result is used as a reference basis of thermal runaway protection design, and compared with the prior art depending on experiments, consumption of manpower and material resources is greatly reduced, efficiency is obviously improved, and meanwhile danger in the experiment process is avoided to the maximum extent. According to the method, single body thermal runaway modeling is finally expanded to battery protection design, the universality of the method is wide, and the method can be well applied to different types of single bicycle bodies and grouping forms.

CN117129869A discloses a battery pack thermal field distribution state prediction method Wherein the method comprises the steps of obtaining temperature characteristic curves of a single battery under different working conditions based on a single battery charging and discharging experiment; based on the temperature characteristic curve of the single battery, constructing a battery heating model of the single battery; establishing a battery pack three-dimensional model based on the single batteries and the battery pack; and performing thermal field simulation processing on the three-dimensional model of the battery pack based on the battery heating model to obtain a thermal field distribution state of the battery pack corresponding to the three-dimensional model of the battery pack. The embodiment of the invention further relates to a battery pack thermal field distribution state prediction device and system and a storage medium. According to the embodiment of the invention, the heat distribution of the battery pack under different working conditions can be accurately simulated according to the established battery heating model, so that a user can establish a more efficient battery heat management system based on the heat distribution of the battery pack, and the highest temperature and the temperature difference of the battery pack are ensured to be within a proper working range.

### SUMMARY

The present application provides a cell safety prediction method, apparatus, device and medium, which are used to solve the problem that the existing cell safety estimation solution needs to accurately obtain material compositions and reaction situation for modeling, and a corresponding system structure is complex, resulting in low estimation efficiency. The present invention is defined in appended set of claims.

In a first aspect, the present application provides a cell safety prediction method, including:
determining a first environmental parameter of a target area, performing a first thermal runaway operation on a target cell according to the first environmental parameter until a thermal runaway phenomenon occurs in the target cell, and obtaining a first state parameter of the target cell during the first thermal runaway operation;
determining a target heat production model corresponding to each target cell according to the first state parameter, where the target heat production model is used to indicate a quantity of heat production of each target cell under a preset working parameter;
establishing a structural model of a target battery pack, performing a second thermal runaway operation on the structural model, and determining a second state parameter of each target cell according to each target heat production model during the second thermal runaway operation; and
determining safety of the target battery pack according to the second state parameter, where the second state parameter is used to indicate a thermal runaway condition of each target cell.

The first environmental parameter includes a thermal insulation parameter, and the thermal insulation parameter is used to indicate an environmental parameter for a situation in which a thermal insulation condition is maintained in the target area;
before the determining the first environmental parameter of the target area, and performing the first thermal runaway operation on the target cell according to the first environmental parameter until the thermal runaway phenomenon occurs in the target cell, the method further includes:
charging the target cell until each target cell is in a fully-charged state;
determining a plurality of first measurement points associated with the target cell; and
where the first measurement point is used to obtain a temperature parameter of each target cell; and
the determining the first environmental parameter of the target area, and performing the first thermal runaway operation on the target cell according to the first environmental parameter until the thermal runaway phenomenon occurs in the target cell includes:
   determining the first environmental parameter of the target area, and performing the first thermal runaway operation on the target cell according to the first environmental parameter;
   determining whether the thermal runaway phenomenon occurs in the target cell according to the temperature parameter corresponding to each first measurement point; and
   if the thermal runaway phenomenon does not occur in the target cell, adjusting the first environmental parameter according to a preset environmental parameter change gradient until the thermal runaway phenomenon occurs in the target cell.

As an optional implementation, the first state parameter includes one or more of the following: a cell surface temperature, a charging current and a cell voltage, the target heat production model includes a target overcharging model, and the determining the target heat production model corresponding to each target cell according to the first state parameter includes:
establishing a single cell overcharging model corresponding to each target cell according to the first state parameter, and determining a third state parameter in each single cell overcharging model;
where the single cell overcharging model includes an electrochemical reaction heat production model and a decomposition reaction heat production model; and
optimizing each third state parameter to obtain a target state parameter, and determining the target overcharging model corresponding to each target cell according to the target state parameter and each single cell overcharging model.

As an optional implementation, the optimizing each third state parameter to obtain the target state parameter includes:
determining a target boundary and a target order of magnitude of each third state parameter;
determining a state parameter change gradient corresponding to each third state parameter according to the target order of magnitude of each third state parameter;
adjusting each third state parameter in the target boundary according to the state parameter change gradient corresponding to each third state parameter;
under different values of each third state parameter, determining a measured value of a cell surface temperature corresponding to each target cell, and a calculated value of the cell surface temperature corresponding to each target cell calculated according to the single cell overcharging model;
determining a first thermal runaway initial temperature according to the measured value, determining a second thermal runaway initial temperature according to the calculated value, determining a thermal runaway initial temperature difference according to the first thermal runaway initial temperature and the second thermal runaway initial temperature, and determining a sum of squares of the difference according to the measured value and the calculated value; and
determining candidate parameter values of the third state parameter under a condition that the sum of squares of the difference is less than a preset threshold of the sum of squares, and/or the thermal runaway initial temperature difference is less than a preset difference threshold, and determining the target state parameter from the candidate parameter values.

As an optional implementation, the establishing the structural model of the target battery pack, and performing the second thermal runaway operation on the structural model includes:
determining an electrical component structure and a mechanical component structure of the target battery pack, and establishing the structural model of the target battery pack according to the electrical component structure and the mechanical component structure;
where the electrical component structure includes a cell structure and a connection bank structure;
establishing a first heat production model corresponding to the cell structure according to the target overcharging model of each target cell; determining a quantity of ohmic heat production corresponding to the connection bank structure, and establishing a second heat production model; and determining a convective heat transfer coefficient and a radiation emissivity corresponding to the mechanical component structure, and establishing a third heat production model; and
performing simulative overcharging on the structural model according to a target charging time and a target charging current to perform the second thermal runaway operation, and determining a thermal runaway condition;
where the thermal runaway condition is associated with the first heat production model, the second heat production model and the third heat production model and used to indicate a corresponding thermal physical condition under which the safety of the target battery pack meets a preset safety requirement.

In a second aspect, the present application provides a cell safety prediction apparatus, including:
a determination module, configured to determine a first environmental parameter of a target area;
a processing module, configured to perform a first thermal runaway operation on a target cell according to the first environmental parameter until a thermal runaway phenomenon occurs in the target cell, and obtain a first state parameter of the target cell during the first thermal runaway operation;
where the processing module is further configured to determine a target heat production model corresponding to each target cell according to the first state parameter, where the target heat production model is used to indicate a quantity of heat production of each target cell under a preset working parameter;
the processing module is further configured to establish a structural model of a target battery pack, perform a second thermal runaway operation on the structural model, and determine a second state parameter of each target cell according to each target heat production model during the second thermal runaway operation; and
the processing module is further configured to determine safety of the target battery pack according to the second state parameter, where the second state parameter is used to indicate a thermal runaway condition of each target cell.

The first environmental parameter includes a thermal insulation parameter, and the thermal insulation parameter is used to indicate an environmental parameter for a situation in which a thermal insulation condition is maintained in the target area;
before the determination module determines the first environmental parameter of the target area, the processing module is further configured to:
charge the target cell until each target cell is in a fully-charged state;
determine a plurality of first measurement points associated with the target cell; and
where the first measurement point is used to obtain a temperature parameter of each target cell; and
a specific way in which the processing module performs the first thermal runaway operation on the target cell according to the first environmental parameter until the thermal runaway phenomenon occurs in the target cell after the determination module determines the first environmental parameter of the target area includes:
   determining the first environmental parameter of the target area, and performing the first thermal runaway operation on the target cell according to the first environmental parameter;
   determining whether the thermal runaway phenomenon occurs in the target cell according to the temperature parameter corresponding to each first measurement point; and
   if the thermal runaway phenomenon does not occur in the target cell, adjusting the first environmental parameter according to a preset environmental parameter change gradient until the thermal runaway phenomenon occurs in the target cell.

As an optional implementation, the first state parameter includes one or more of the following: a cell surface temperature, a charging current and a cell voltage, the target heat production model includes a target overcharging model, and a specific way in which the processing module determines the target heat production model corresponding to each target cell according to the first state parameter includes:
establishing a single cell overcharging model corresponding to each target cell according to the first state parameter, and determining a third state parameter in each single cell overcharging model;
where the single cell overcharging model includes an electrochemical reaction heat production model and a decomposition reaction heat production model; and
optimizing each third state parameter to obtain a target state parameter, and determining the target overcharging model corresponding to each target cell according to the target state parameter and each single cell overcharging model.

As an optional implementation, a specific way in which the processing module optimizes each third state parameter to obtain the target state parameter includes:
determining a target boundary and a target order of magnitude of each third state parameter;
determining a state parameter change gradient corresponding to each third state parameter according to the target order of magnitude of each third state parameter;
adjusting each third state parameter in the target boundary according to the state parameter change gradient corresponding to each third state parameter;
under different values of each third state parameter, determining a measured value of a cell surface temperature corresponding to each target cell, and a calculated value of the cell surface temperature corresponding to each target cell calculated according to the single cell overcharging model;
determining a first thermal runaway initial temperature according to the measured value, determining a second thermal runaway initial temperature according to the calculated value, determining a thermal runaway initial temperature difference according to the first thermal runaway initial temperature and the second thermal runaway initial temperature, and determining a sum of squares of the difference according to the measured value and the calculated value; and
determining candidate parameter values of the third state parameter under a condition that the sum of squares of the difference is less than a preset threshold of the sum of squares, and/or the thermal runaway initial temperature difference is less than a preset difference threshold, and determining the target state parameter from the candidate parameter values.

As an optional implementation, a specific way in which the processing module establishes the structural model of the target battery pack, and performs the second thermal runaway operation on the structural model includes:
determining an electrical component structure and a mechanical component structure of the target battery pack, and establishing the structural model of the target battery pack according to the electrical component structure and the mechanical component structure;
where the electrical component structure includes a cell structure and a connection bank structure;
establishing a first heat production model corresponding to the cell structure according to the target overcharging model of each target cell; determining a quantity of ohmic heat production corresponding to the connection bank structure, and establishing a second heat production model; and determining a convective heat transfer coefficient and a radiation emissivity corresponding to the mechanical component structure, and establishing a third heat production model; and
performing simulative overcharging on the structural model according to a target charging time and a target charging current to perform the second thermal runaway operation, and determining a thermal runaway condition;
where the thermal runaway condition is associated with the first heat production model, the second heat production model and the third heat production model and used to indicate a corresponding thermal physical condition under which the safety of the target battery pack meets a preset safety requirement.

In a third aspect, the present application further provides an electronic device, including:
at least one processor; and
a memory communicatively connected with the at least one processor, where
the memory stores instructions capable of being executed by the at least one processor, and the instructions, when being executed by the at least one processor, enable the at least one processor to execute the method as described in the first aspect.

In a fourth aspect, the present application further provides a computer readable storage medium, where the computer readable storage medium stores computer execution instructions, and the computer execution instructions, when being executed by a processor, are used to implement the method as described in the first aspect.

The present application provides a cell safety prediction method, apparatus, device and medium determines a first environmental parameter, and performs a first thermal runaway operation on a target cell according to the first environmental parameter until thermal runaway occurs in the target cell; obtains a first state parameter of the target cell during the process to determine a target heat production model according to the first state parameter, performs three-dimensional modeling on a battery structure, and performs a second thermal runaway operation according to the three-dimensional model, and obtains a the second state parameter during the second thermal runaway operation according to the determined target heat production model, so that safety of a target battery pack can be judged according to the second state parameter. Therefore, through an actual thermal runaway operation, the target heat production model is determined, and through a simulated thermal runaway operation, the safety of the target battery pack is determined according to the target heat production model, which saves the test cost and simplifies a cell safety prediction system; and at the same time, the method reduces requirements of mechanism modeling for basic data, and generally improves the efficiency and accuracy in the prediction of the cell safety.

### BRIEF DESCRIPTION OF THE DRAWINGS

The drawings described herein are incorporated into the specification and constitute a part of the specification. The drawings illustrate embodiments in conformity with the present application and are used to explain the principle of the present application together with the specification.
FIG. 1 is a flowchart of a cell safety prediction method provided by an embodiment of the present application.
FIG. 2 is a structural schematic diagram of a cell safety prediction apparatus provided by an embodiment of the present application.
FIG. 3 is a structural schematic diagram of a cell safety prediction electronic device provided by an embodiment of the present application.

Definite embodiments of the present application are shown by the above accompanying drawings, which are described in more details hereinafter. These accompanying drawings and textual descriptions are not intended to limit the scope of the present application in any way, but rather to illustrate the concept of the present application for those skilled in the art with reference to specific embodiments.

### DESCRIPTION OF EMBODIMENTS

Exemplary embodiments are described in detail herein, and examples are shown in the accompanying drawings. When the following description involves in the accompanying drawings, the same numerals in different accompanying drawings indicate the same or similar elements, unless otherwise indicated. The implementations described in the following exemplary embodiments do not represent all implementations consistent with the present application. On the contrary, the implementations are only examples of apparatuses and methods consistent with some aspects of the present application as claimed in claims.

Batteries and energy storage system products need to be subjected to overcharging test to verify the safety performance thereof. By reasonably designing the batteries and battery packs, thermal runaway that may be caused by the overcharging of batteries can be avoided, thus reducing the occurrence of fire or explosion that seriously affects the safety.

Whether the thermal runaway occurs when the battery pack is overcharged is related to the overcharging performance of a single cell and the structural design of the battery pack. Before the actual test on the overcharging of the battery pack, the overcharging performance of the battery pack can be estimated, and if an estimation result shows that the battery pack has high risk of thermal runaway, the design can be adjusted in time, which can reduce the material cost and time cost of trial and error using actual materials, and is beneficial for improving the research and development efficiency.

However, the current estimation solution requires to accurately obtain material compositions and reaction situation for modeling, and a corresponding system structure is complex, resulting in low estimation efficiency. Therefore, a cell safety prediction method is needed to simplify the cell safety prediction system and improve the efficiency in the prediction of the cell safety.

A technical concept of the present application is to determine a first environmental parameter, and perform a first thermal runaway operation on a target cell according to the first environmental parameter until thermal runaway occurs in the target cell; obtain a first state parameter of the target cell during the process to determine a target heat production model according to the first state parameter, perform three-dimensional modeling on a battery structure, and perform a second thermal runaway operation according to the three-dimensional model, and obtain a the second state parameter during the second thermal runaway operation according to the determined target heat production model, so that safety of a target battery pack can be judged according to the second state parameter. Therefore, through an actual thermal runaway operation, the target heat production model is determined, and through a simulated thermal runaway operation, the safety of the target battery pack is determined according to the target heat production model, which saves the test cost and simplifies a cell safety prediction system; and at the same time, the method reduces requirements of mechanism modeling for basic data, and generally improves the efficiency and accuracy in the prediction of the cell safety.

### Embodiment I

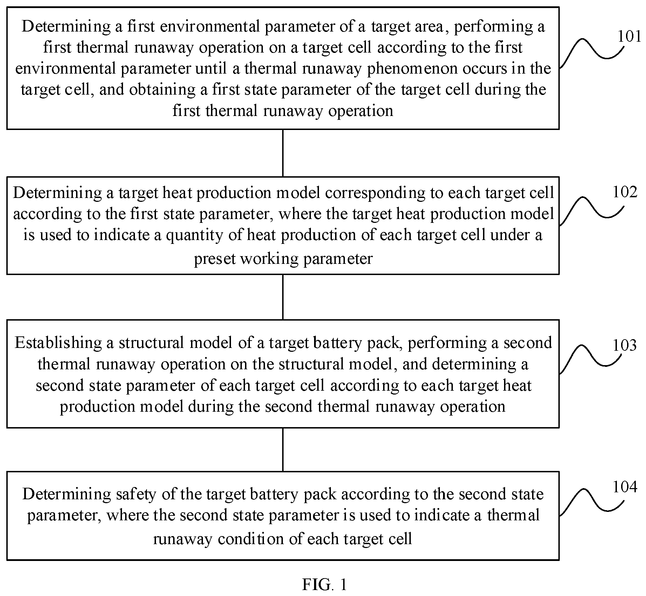

Referring to FIG. 1, FIG. 1 is a flowchart of a cell safety prediction method provided by an embodiment of the present application. As shown in FIG. 1, the method includes the following steps.

S101: determining a first environmental parameter of a target area, performing a first thermal runaway operation on a target cell according to the first environmental parameter until a thermal runaway phenomenon occurs in the target cell, and obtaining a first state parameter of the target cell during the first thermal runaway operation.

The target cell structurally includes a plurality of target cells and corresponding mechanical and electrical connection devices, and a corresponding structural model needs to be established according to an actual structure of the target cell in the subsequent modeling process of the structural model. In the present application, the thermal runaway of the target cell may be determined according to the thermal runaway diffusion phenomenon of a plurality of target cells.

During the first thermal runaway operation, it is necessary to ensure that the thermal runaway phenomenon occurs in the target cell, so that the first state parameter corresponding to the target cell in a process from charging to the thermal runaway can be recorded. If the thermal runaway phenomenon does not occur in the target cell under the current environmental condition, the first environmental parameter needs to be adjusted to ensure the occurrence of the thermal runaway in the target cell, which can specifically refer to relevant descriptions of other implementations.

S102: determining a target heat production model corresponding to each target cell according to the first state parameter, where the target heat production model is used to indicate a quantity of heat production of each target cell under a preset working parameter.

The target heat production model can include an electrochemical reaction heat production model and a decomposition reaction heat production model, which is described in detail in other implementations; and it shall be noted that in a case where a definite convective heat transfer coefficient and radiation emissivity of the single cell are known, the method provided by the present application can be carried out not strictly in a thermal insulation environment, but can be carried out in a constant-temperature or variable-temperature environment at any temperature. The target heat production model then needs to consider the actual thermophysical phenomena, and the complexity of the model may increase.

S103: establishing a structural model of a target battery pack, performing a second thermal runaway operation on the structural model, and determining a second state parameter of each target cell according to each target heat production model during the second thermal runaway operation.

The structure model, i.e. a three-dimensional model result obtained in modeling software according to the plurality of target cells and the corresponding mechanical and electrical connection devices is used to simulate the actual target battery pack structure, the second thermal runaway operation is performed on the structural model, and the corresponding state parameter is obtained according to the target heat production model in the process, thus saving the cost for testing the cell safety, and simplifying the system structure.

S104: determining safety of the target battery pack according to the second state parameter, where the second state parameter is used to indicate a thermal runaway condition of each target cell.

The second state parameter can include one or more of the following: a temperature distribution of each target cell, a preset cell temperature change rate of at least one cell surface on each target cell and an overall temperature distribution and temperature change rate of the target battery pack, which can determine the thermal runaway condition of the target cell, thereby realizing the test on the overall safety of each target cell and the target battery pack.

The first environmental parameter includes a thermal insulation parameter, and the thermal insulation parameter is used to indicate an environmental parameter for a situation in which a thermal insulation condition is maintained in the target area;
before the determining the first environmental parameter of the target area, and performing the first thermal runaway operation on the target cell according to the first environmental parameter until the thermal runaway phenomenon occurs in the target cell, the method further includes:
charging the target cell until each target cell is in a fully-charged state;
determining a plurality of first measurement points associated with the target cell; and
where the first measurement point is used to obtain a temperature parameter of each target cell; and
the determining the first environmental parameter of the target area, and performing the first thermal runaway operation on the target cell according to the first environmental parameter until the thermal runaway phenomenon occurs in the target cell includes:
   determining the first environmental parameter of the target area, and performing the first thermal runaway operation on the target cell according to the first environmental parameter;
   determining whether the thermal runaway phenomenon occurs in the target cell according to the temperature parameter corresponding to each first measurement point; and
   if the thermal runaway phenomenon does not occur in the target cell, adjusting the first environmental parameter according to a preset environmental parameter change gradient until the thermal runaway phenomenon occurs in the target cell.

Thus can be seen that in the implementation, the preliminary preparation of the first thermal runaway operation is completed by pre-charging the target cell until the target cell is fully charged before the first thermal runaway operation and determining the plurality of first measurement points for obtaining the temperature parameter; at the same time, the thermal insulation environment is created for the first thermal runaway operation according to the determined first environmental parameter, the first thermal runaway operation is performed on the target cell in the thermal insulation environment, and according to an actual state of the target cell in the first thermal runaway operation, the first environmental parameter is adjusted until the thermal runaway phenomenon actually occurs in the target cell.

Consequently, the effectiveness and practicability of the first thermal runaway operation process can be ensured, and moreover, during the first thermal runaway operation, the parameter related to the overcharged thermal runaway phenomenon of the target cell can be successfully obtained, which can provide effective basic data for the target heat production model. In conclusion, through an actual thermal runaway operation, the target heat production model is determined, and through a simulated thermal runaway operation, the safety of the target battery pack is determined according to the target heat production model, which saves the test cost and simplifies a cell safety prediction system; and at the same time, the method reduces requirements of mechanism modeling for basic data, and generally improves the efficiency and accuracy in the prediction of the cell safety.

As an optional implementation, the first state parameter includes one or more of the following: a cell surface temperature, a charging current and a cell voltage, the target heat production model includes a target overcharging model, and the determining the target heat production model corresponding to each target cell according to the first state parameter includes:
establishing a single cell overcharging model corresponding to each target cell according to the first state parameter, and determining a third state parameter in each single cell overcharging model;
where the single cell overcharging model includes an electrochemical reaction heat production model and a decomposition reaction heat production model; and
optimizing each third state parameter to obtain a target state parameter, and determining the target overcharging model corresponding to each target cell according to the target state parameter and each single cell overcharging model.

In the implementation, the single cell overcharging model of each target cell can be established through the first state parameter, the third state parameter to be optimized is determined in the single cell overcharging model, the corresponding optimization process is performed according to data features of the third state parameter to obtain each target state parameter, thereby determining the target overcharging model, thus improving the effectiveness of the target overcharging model and improving the efficiency for establishing the target overcharging model; through an actual thermal runaway operation, the target heat production model is determined, and through a simulated thermal runaway operation, the safety of the target battery pack is determined according to the target overcharging model, which saves the test cost and simplifies a cell safety prediction system; and at the same time, the method reduces requirements of mechanism modeling for basic data, and generally improves the efficiency and accuracy in the prediction of the cell safety.

As an optional implementation, the optimizing each third state parameter to obtain the target state parameter includes:
determining a target boundary and a target order of magnitude of each third state parameter;
determining a state parameter change gradient corresponding to each third state parameter according to the target order of magnitude of each third state parameter;
adjusting each third state parameter in the target boundary according to the state parameter change gradient corresponding to each third state parameter;
under different values of each third state parameter, determining a measured value of a cell surface temperature corresponding to each target cell, and a calculated value of the cell surface temperature corresponding to each target cell calculated according to the single cell overcharging model;
determining a first thermal runaway initial temperature according to the measured value, determining a second thermal runaway initial temperature according to the calculated value, determining a thermal runaway initial temperature difference according to the first thermal runaway initial temperature and the second thermal runaway initial temperature, and determining a sum of squares of the difference according to the measured value and the calculated value; and
determining candidate parameter values of the third state parameter under a condition that the sum of squares of the difference is less than a preset threshold of the sum of squares, and/or the thermal runaway initial temperature difference is less than a preset difference threshold, and determining the target state parameter from the candidate parameter values.

It should be noted that the thermal runaway initial temperature difference and the sum of squares of the difference are only an optional screening condition, and in the actual application scene, indexes that can measure the difference between the first thermal runaway initial temperature and the second thermal runaway initial temperature can be used as the screening condition. In the target boundary, the process of adjusting each third state parameter according to the state parameter change gradient corresponding to each third state parameter is essentially a grid optimization process, which is simple in application, but may have certain error; and in some scenes with higher accuracy requirements, other optimization models can also be used for parameter optimization.

In the implementation, an optimization change gradient is determined through the parameter boundary and an order-of-magnitude distribution of the third state parameter, each third state parameter is changed according to the corresponding change gradient, the measured value of the cell surface temperature corresponding to the target cell and the calculated value of the cell surface temperature corresponding to the target cell calculated according to the single cell overcharging model are determined through a grid optimization way under different values of the third state parameter, and the first thermal runaway initial temperature and the second thermal runaway initial temperature are determined according to the measured value and the calculated value so as to obtain the candidate parameters of the third state parameter, and the target state parameter are further selected from the candidate parameters, thereby determining the target overcharging model.

As a result, the effectiveness of the target overcharging model is improved, and the efficiency for establishing the target overcharging model is improved; through an actual thermal runaway operation, the target heat production model is determined, and through a simulated thermal runaway operation, the safety of the target battery pack is determined according to the target overcharging model, which saves the test cost and simplifies a cell safety prediction system; and at the same time, the method reduces requirements of mechanism modeling for basic data, and generally improves the efficiency and accuracy in the prediction of the cell safety.

As an optional implementation, the establishing the structural model of the target battery pack, and performing the second thermal runaway operation on the structural model includes:
determining an electrical component structure and a mechanical component structure of the target battery pack, and establishing the structural model of the target battery pack according to the electrical component structure and the mechanical component structure;
where the electrical component structure includes a cell structure and a connection bank structure;
establishing a first heat production model corresponding to the cell structure according to the target overcharging model of each target cell; determining a quantity of ohmic heat production corresponding to the connection bank structure, and establishing a second heat production model; and determining a convective heat transfer coefficient and a radiation emissivity corresponding to the mechanical component structure, and establishing a third heat production model; and
performing simulative overcharging on the structural model according to a target charging time and a target charging current to perform the second thermal runaway operation, and determining a thermal runaway condition;
where the thermal runaway condition is associated with the first heat production model, the second heat production model and the third heat production model and used to indicate a corresponding thermal physical condition under which the safety of the target battery pack meets a preset safety requirement.

In the implementation, through the actual structure of the target cell, the modeling is performed, and a corresponding heat production formula and the thermal runaway condition are determined; and in the process of simulating the overcharging on the structural model according to the target charging time and the target charging current and performing the second thermal runaway operation, the second state parameter can be obtained according to the determined target heat production model, and the safety of the target battery pack can be judged according to the second state parameter. Therefore, through an actual thermal runaway operation, the target heat production model is determined, and through a simulated thermal runaway operation, the safety of the target battery pack is determined according to the target heat production model, which saves the test cost and simplifies a cell safety prediction system; and at the same time, the method reduces requirements of mechanism modeling for basic data, and generally improves the efficiency and accuracy in the prediction of the cell safety.

In an application scene, according to the solution provided by the present application, after the single cell is first over-charged with different currents to a cut-off voltage under a thermal insulation condition, the cell is then gradually heated in a radiation heating way until the thermal runaway occurs, and in the whole process, the voltage, current and surface temperature of the battery are recorded. Then according to the measurement result of the single cell, the quantity of heat production in the electrochemical reaction and the quantity of heat production in the decomposition side reaction when the single cell is overcharged are calculated, i.e. the electrochemical reaction heat production model and the decomposition reaction heat production model abovementioned are calculated. A rate of electrochemical reaction is an exponentially correlated function of the state of charge of the battery when the cell is over-charged and the rate of decomposition reaction. The rate of decomposition side reaction follows Arrhenius equation, a concentration of reactants of the decomposition side reaction is related to a percentage of active substances inside the cell, the rate of the decomposition side reaction and the state of charge of the overcharged battery. The electrochemical reaction and the decomposition reaction are coupled. All parameters in the equation can be automatically solved by an optimization algorithm, and when a difference between a measured temperature rise and a calculated temperature rise on the cell surface is less than a set value, a group of optimal equation parameters is selected from a group of parameters satisfying the condition. Thereafter, a three-dimensional model can be established according to the actual design of the battery pack in finite element calculation software, and the quantity of heat production that varies with the state of charge and temperature of the overcharged battery is assigned to each single cell. The overcharging process in the actual test is simulated by taking a current as an input quantity, so that the state of charge of the cell in the battery pack increases, the temperature rises, and the electrochemical and decomposition reactions are accelerated. When the thermal runaway phenomenon occurs in the cells in the battery pack, it represents that the overcharging test of the battery pack has a risk of fire, and the design needs to be adjusted. A criterion for determining the thermal runaway diffusion phenomenon may be that the thermal runaway occurs in a plurality of batteries successively, at the same time, a rate of temperature rise reaches a preset threshold under a current working condition, and a duration exceeds a preset determination duration. If no thermal runaway diffusion occurs, an experiment of real batteries can be carried out directly according to the design to verify whether the fire happens, thereby determining the safety.

Specifically, in a scene where the overcharging test with current of *I*_{C} is performed with a preset parameter on the battery pack consisting of a plurality cells to verify whether the thermal runaway occurs, the method of the present application can be implemented according to the following form.

Single cell overcharging and heating test is performed under the thermal insulation condition.

After the battery is fully charged, a plurality of temperature measurement points are arranged on the surface of the battery. The battery is arranged in a device capable of creating a thermal insulation environment, after the data recorded at the temperature measurement points is stable, and no heat exchange occurs between the cell and peripheral environment (that is, the temperature distribution inside and outside the cell and inside the device is uniform and stable), the overcharging is performed under a charging and stopping condition set according to the prediction requirements.

If the thermal runaway already occurs at the overcharging, the subsequent heating does not need to be performed. If the thermal runaway does not occur after the overcharging is ended, the temperature inside a thermal insulation device increases gradually at a certain temperature gradient, after the temperature at the temperature point of cell surface is equal to a temperature set value of the thermal insulation device and stable, the temperature of the thermal insulation device further increases until the thermal runaway occurs in the cell.

The cell surface temperature, the charging current and the cell voltage are recorded in the whole process of the test.

If the definite convective heat transfer coefficient and radiation emissivity of the single cell are known, the test can be carried out not in a thermal insulation environment, but can be carried out in a constant-temperature or variable-temperature environment at any temperature.

Furthermore, the overcharging condition can also be changed to various conditions that electrical parameters are constant/variable, such as current constant/variable and power constant/variable according to the actual situation. The present application is described by taking the overcharging as an example, but shall not be limited thereto.

The single cell overcharging model can be established in the finite element calculation software, and a heat production calculation formula can be deduced based on the data obtained in the previous step.

An expression of heat production in overcharging reaction is as shown in formula (1)-formula (3): $\begin{matrix}{R}_{c} = {A}_{c} ∗ {e}^{\frac{{E}_{{a}_{c}}}{{R}_{const} ∗ T}} ∗ {c}_{c} \left(t\leq t0\right) \\ {R}_{c} = 0 \left(t>t0\right)\end{matrix}$ Formula (1) $\frac{{dc}_{c}}{dt} = \left(\frac{{c}_{act} ∗ I ∗ t}{Ah}-{R}_{de}\right)$ Formula (2) ${Q}_{c} = ρ ∗ {H}_{c} ∗ {R}_{c}$ Formula (3)

In the formula, *R*_{c} is an overcharging reaction rate, *A*_{c} is a pre-exponential factor of the overcharging reaction, *E_{a_c}* is an activation energy of the overcharging reaction, *R*_{const} is a molar gas constant, T is a thermodynamic temperature, *c*_{c} is a volume fraction of active substances of the overcharging reaction, t0 is an overcharging duration, *c*_{act} is a ratio between a core volume and a cell volume, *I* is an overcharging current, *Ah* is a rated capacity of the battery, *R*_{de} is a decomposition reaction rate, *Q*_{c} is a heat production rate of the overcharging reaction, and *H*_{c} is an enthalpy of the overcharging reaction.

An expressions for heat production in the decomposition reaction is as shown in formula (4)-formula (6): ${R}_{de} = {A}_{de} ∗ {e}^{\frac{{E}_{a _ de}}{{R}_{const ∗ T}}} ∗ {c}_{de}$ Formula (4) $\frac{{dc}_{de}}{dt} = \frac{{dc}_{c}}{dt} - {R}_{de}$ Formula (5) ${Q}_{de} = ρ ∗ {H}_{de} ∗ {R}_{de}$ Formula (6)

In the formula, *A*_{de} is a pre-exponential factor of decomposition reaction, *E_{a_de}* is an activation energy of the decomposition reaction, *c*_{de} is a volume fraction of active substances of the overcharging reaction, *Q*_{de} is a heat production rate of the decomposition reaction, and *H*_{de} is an enthalpy of the decomposition reaction.

An expression for ohmic heat production during charging is as shown in formula (7): ${Q}_{ohm} = {I}^{2} ∗ {R}_{0}$ Formula (7)

In the formula, *Q*ₒₕₘ is an ohmic heat production rate, *R*₀ is a direct current internal resistance of the cell when SOC is under the preset condition, and the change of the internal resistance caused by the overcharging is reflected by the heat production rate of the overcharging reaction.

Since the cell is arranged in the thermal insulation environment, the heat dissipation capacity is 0.

A multi-parameter optimization method is used to search best-matched target parameters *A*_{de}*, A_{c}, H*_{de}*, E*_{*a_*c} and *E*_{*a*_de} at possible upper and lower boundaries of the target parameter under a stop condition that a sum of squares of the difference between a calculated result and a measured result of a simulation temperature at different positions of the cell is less than a certain value. Since the difference of the magnitude of the five parameters is great, a step change rate of each parameter needs to be constrained when the optimization algorithm is set, which is conducive to rapidly obtaining a matched result.

Except a minimal sum of squares of the difference between the calculated value and the measured value, a difference between the thermal runaway initial temperature (a temperature rise rate of the cell is greater than a preset temperature rise rate threshold) of the calculated value and the measured value needs to be controlled to be less than a certain value.

Thereafter, the overcharging thermal runaway model of the battery pack can be established in the finite element calculation software. Whether the thermal runaway may occur in a heat transfer process during the overcharging and after stopping the overcharging is predicted.

The three-dimensional model of the battery pack including the cells, the connection banks and other structural components is established according to the actual design of the battery pack. The ohmic heat production is represented in a thermoelectric coupling manner at the connection bank. The heat production of the overcharging reaction and decomposition reaction of each cell is set independently according to the obtained target parameter, which indicates that the reaction heat of each cell depends on the temperature of the cell and the volume fraction of the active substances. The charging time of the battery pack is equal to an actual measured result that the single cell is overcharged to reach the stop condition under the charging current.

Corresponding convective heat transfer coefficient and radiation emissivity are set on a position of the battery pack contacting the exterior according to the actual condition.

If the thermal runaway does not occur in the battery pack after the overcharging is ended, whether a heat exchange amount in the environment is greater than the heat produced in the decomposition reaction that is still undergoing is an important condition for the occurrence of the thermal runaway. Since the cell in the center of the battery pack is surrounded by peripheral cells, the heat produced by the center cell is difficult to dissipate to the exterior, so that the thermal runaway is mostly likely to occur in the center cell earlier than the cells on other positions.

Whether the battery pack design can ensure the safety when the battery pack is overcharged is judged according to a calculated result.

A probe is arranged on a preset position of each cell in the battery pack model to obtain the temperature rise rate calculated at each cell, and examine whether the thermal runaway or thermal runaway diffusion occurs (the thermal runaway occurs successively in the cells on adjacent positions). If the thermal runaway or the thermal runaway diffusion occurs, it indicates that the current design has a risk existing therein and needs to be adjusted. If there is no thermal runaway or thermal runaway diffusion, the actual test can be performed for real verification.

The present embodiment determines a first environmental parameter, and performs a first thermal runaway operation on a target cell according to the first environmental parameter until thermal runaway occurs in the target cell; obtains a first state parameter of the target cell during the process to determine a target heat production model according to the first state parameter, performs three-dimensional modeling on a battery structure, and performs a second thermal runaway operation according to the three-dimensional model, and obtains a the second state parameter during the second thermal runaway operation according to the determined target heat production model, so that safety of a target battery pack can be judged according to the second state parameter. Therefore, through an actual thermal runaway operation, the target heat production model is determined, and through a simulated thermal runaway operation, the safety of the target battery pack is determined according to the target heat production model, which saves the test cost and simplifies a cell safety prediction system; and at the same time, the method reduces requirements of mechanism modeling for basic data, and generally improves the efficiency and accuracy in the prediction of the cell safety.

### Embodiment II

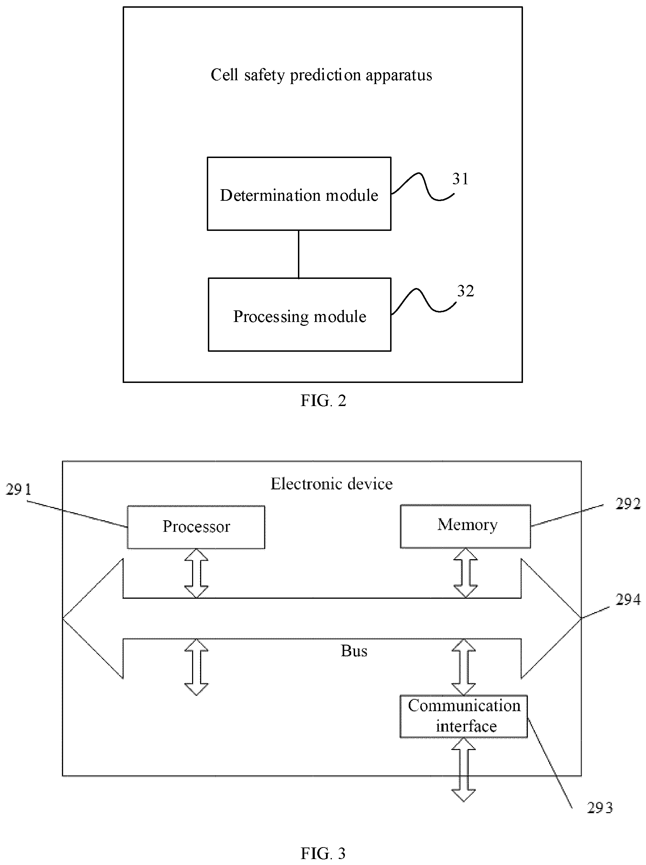

An embodiment of the present application further provides a cell safety prediction apparatus to implement the aforementioned method. Referring to FIG. 2, FIG. 2 is a structural schematic diagram of a cell safety prediction apparatus provided by an embodiment of the present application. As shown in FIG. 2, the apparatus includes:
a determination module 31, configured to determine a first environmental parameter of a target area;
a processing module 32, configured to perform a first thermal runaway operation on a target cell according to the first environmental parameter until a thermal runaway phenomenon occurs in the target cell, and obtain a first state parameter of the target cell during the first thermal runaway operation;
where the processing module 32 is further configured to determine a target heat production model corresponding to each target cell according to the first state parameter, where the target heat production model is used to indicate a quantity of heat production of each target cell under a preset working parameter;
the processing module 32 is further configured to establish a structural model of a target battery pack, perform a second thermal runaway operation on the structural model, and determine a second state parameter of each target cell according to each target heat production model during the second thermal runaway operation; and
the processing module 32 is further configured to determine safety of the target battery pack according to the second state parameter, where the second state parameter is used to indicate a thermal runaway condition of each target cell.

The present embodiment determines a first environmental parameter, and performs a first thermal runaway operation on a target cell according to the first environmental parameter until thermal runaway occurs in the target cell; obtains a first state parameter of the target cell during the process to determine a target heat production model according to the first state parameter, performs three-dimensional modeling on a battery structure, and performs a second thermal runaway operation according to the three-dimensional model, and obtains a the second state parameter during the second thermal runaway operation according to the determined target heat production model, so that safety of a target battery pack can be judged according to the second state parameter. Therefore, through an actual thermal runaway operation, the target heat production model is determined, and through a simulated thermal runaway operation, the safety of the target battery pack is determined according to the target heat production model, which saves the test cost and simplifies a cell safety prediction system; and at the same time, the apparatus reduces requirements of mechanism modeling for basic data, and generally improves the efficiency and accuracy in the prediction of the cell safety.

The first environmental parameter includes a thermal insulation parameter, and the thermal insulation parameter is used to indicate an environmental parameter for a situation in which a thermal insulation condition is maintained in the target area;
before the determination module 31 determines the first environmental parameter of the target area, the processing module 32 is further configured to:
charge the target cell until each target cell is in a fully-charged state;
determine a plurality of first measurement points associated with the target cell; and
where the first measurement point is used to obtain a temperature parameter of each target cell; and
a specific way in which the processing module 32 performs the first thermal runaway operation on the target cell according to the first environmental parameter until the thermal runaway phenomenon occurs in the target cell after the determination module 31 determines the first environmental parameter of the target area includes:
   determining the first environmental parameter of the target area, and performing the first thermal runaway operation on the target cell according to the first environmental parameter;
   determining whether the thermal runaway phenomenon occurs in the target cell according to the temperature parameter corresponding to each first measurement point; and
   if the thermal runaway phenomenon does not occur in the target cell, adjusting the first environmental parameter according to a preset environmental parameter change gradient until the thermal runaway phenomenon occurs in the target cell.

The preliminary preparation of the first thermal runaway operation is completed by pre-charging the target cell until the target cell is fully charged before the first thermal runaway operation and determining the plurality of first measurement points for obtaining the temperature parameter; at the same time, the thermal insulation environment is created for the first thermal runaway operation according to the determined first environmental parameter, the first thermal runaway operation is performed on the target cell in the thermal insulation environment, and according to an actual state of the target cell in the first thermal runaway operation, the first environmental parameter is adjusted until the thermal runaway phenomenon actually occurs in the target cell, thus ensuring the effectiveness and practicability of the first thermal runaway operation process; and moreover, during the first thermal runaway operation, the parameter related to the overcharged thermal runaway phenomenon of the target cell can be successfully obtained, which can provide effective basic data for the target heat production model. In conclusion, through an actual thermal runaway operation, the target heat production model is determined, and through a simulated thermal runaway operation, the safety of the target battery pack is determined according to the target heat production model, which saves the test cost and simplifies a cell safety prediction system; and at the same time, the apparatus reduces requirements of mechanism modeling for basic data, and generally improves the efficiency and accuracy in the prediction of the cell safety.

As an optional implementation, the first state parameter includes one or more of the following: a cell surface temperature, a charging current and a cell voltage, the target heat production model includes a target overcharging model, and a specific way in which the processing module 32 determines the target heat production model corresponding to each target cell according to the first state parameter includes:
establishing a single cell overcharging model corresponding to each target cell according to the first state parameter, and determining a third state parameter in each single cell overcharging model;
where the single cell overcharging model includes an electrochemical reaction heat production model and a decomposition reaction heat production model; and
optimizing each third state parameter to obtain a target state parameter, and determining the target overcharging model corresponding to each target cell according to the target state parameter and each single cell overcharging model.

The single cell overcharging model of each target cell can be established through the first state parameter, the third state parameter to be optimized is determined in the single cell overcharging model, the corresponding optimization process is performed according to data features of the third state parameter to obtain each target state parameter, thereby determining the target overcharging model, thus improving the effectiveness of the target overcharging model and improving the efficiency for establishing the target overcharging model; through an actual thermal runaway operation, the target heat production model is determined, and through a simulated thermal runaway operation, the safety of the target battery pack is determined according to the target overcharging model, which saves the test cost and simplifies a cell safety prediction system; and at the same time, the apparatus reduces requirements of mechanism modeling for basic data, and generally improves the efficiency and accuracy in the prediction of the cell safety.

As an optional implementation, a specific way in which the processing module 32 optimizes each third state parameter to obtain the target state parameter includes:
determining a target boundary and a target order of magnitude of each third state parameter;
determining a state parameter change gradient corresponding to each third state parameter according to the target order of magnitude of each third state parameter;
adjusting each third state parameter in the target boundary according to the state parameter change gradient corresponding to each third state parameter;
under different values of each third state parameter, determining a measured value of a cell surface temperature corresponding to each target cell, and a calculated value of the cell surface temperature corresponding to each target cell calculated according to the single cell overcharging model;
determining a first thermal runaway initial temperature according to the measured value, determining a second thermal runaway initial temperature according to the calculated value, determining a thermal runaway initial temperature difference according to the first thermal runaway initial temperature and the second thermal runaway initial temperature, and determining a sum of squares of the difference according to the measured value and the calculated value; and
determining candidate parameter values of the third state parameter under a condition that the sum of squares of the difference is less than a preset threshold of the sum of squares, and/or the thermal runaway initial temperature difference is less than a preset difference threshold, and determining the target state parameter from the candidate parameter values.

An optimization change gradient is determined through the parameter boundary and an order-of-magnitude distribution of the third state parameter, each third state parameter is changed according to the corresponding change gradient, the measured value of the cell surface temperature corresponding to the target cell and the calculated value of the cell surface temperature corresponding to the target cell calculated according to the single cell overcharging model are determined through a grid optimization way under different values of the third state parameter, and the first thermal runaway initial temperature and the second thermal runaway initial temperature are determined according to the measured value and the calculated value so as to obtain the candidate parameters of the third state parameter, and the target state parameter are further selected from the candidate parameters, thereby determining the target overcharging model, thus improving the effectiveness of the target overcharging model, and improving the efficiency for establishing the target overcharging model; through an actual thermal runaway operation, the target heat production model is determined, and through a simulated thermal runaway operation, the safety of the target battery pack is determined according to the target overcharging model, which saves the test cost and simplifies a cell safety prediction system; and at the same time, the apparatus reduces requirements of mechanism modeling for basic data, and generally improves the efficiency and accuracy in the prediction of the cell safety.

As an optional implementation, a specific way in which the processing module 32 establishes the structural model of the target battery pack, and performs the second thermal runaway operation on the structural model includes:
determining an electrical component structure and a mechanical component structure of the target battery pack, and establishing the structural model of the target battery pack according to the electrical component structure and the mechanical component structure;
where the electrical component structure includes a cell structure and a connection bank structure;
establishing a first heat production model corresponding to the cell structure according to the target overcharging model of each target cell; determining a quantity of ohmic heat production corresponding to the connection bank structure, and establishing a second heat production model; and determining a convective heat transfer coefficient and a radiation emissivity corresponding to the mechanical component structure, and establishing a third heat production model; and
performing simulative overcharging on the structural model according to a target charging time and a target charging current to perform the second thermal runaway operation, and determining a thermal runaway condition;
where the thermal runaway condition is associated with the first heat production model, the second heat production model and the third heat production model and used to indicate a corresponding thermal physical condition under which the safety of the target battery pack meets a preset safety requirement.

Through the actual structure of the target cell, the modeling is performed, and a corresponding heat production formula and the thermal runaway condition are determined; and in the process of simulating the overcharging on the structural model according to the target charging time and the target charging current and performing the second thermal runaway operation, the second state parameter can be obtained according to the determined target heat production model, and the safety of the target battery pack can be judged according to the second state parameter. Therefore, through an actual thermal runaway operation, the target heat production model is determined, and through a simulated thermal runaway operation, the safety of the target battery pack is determined according to the target heat production model, which saves the test cost and simplifies a cell safety prediction system; and at the same time, the apparatus reduces requirements of mechanism modeling for basic data, and generally improves the efficiency and accuracy in the prediction of the cell safety.

### Embodiment III

The present application further provides an electronic device, including:
at least one processor; and
a memory communicatively connected with the at least one processor, where
the memory stores instructions capable of being executed by the at least one processor, and the instructions, when being executed by the at least one processor, enable the at least one processor to execute the method as described in any one of the embodiments.

The present application further provides a computer readable storage medium, where the computer readable storage medium stores computer execution instructions, and the computer execution instructions, when being executed by a processor, are used to implement the method as described in any one of the embodiments.

Referring to FIG. 3, FIG. 3 is a structural schematic diagram of an electronic device provided by an embodiment of the present application. As shown in FIG. 3, the electronic device may include:
a processor 291, a memory 292 storing executable program codes, a communication interface 293 and a bus 294. The processor 291, the memory 292 and the communication interface 293 can be communicated with each other through the bus 294. The communication interface 293 can be configured for information transmission. The processor 291 is coupled with the memory 292, and the processor 291 can invoke a logic instruction (the executable program code) in the memory 292 to perform the method in any one of above embodiments.

Furthermore, the logic instruction in the memory 292 can be implemented in the form of a software functional unit and sold or used as an independent product, and can be stored in a computer readable storage medium.

The memory 292, as a computer readable storage medium, may be configured to store software programs and computer executable programs, such as a program instruction/module corresponding to the method in the embodiments of the present application. The processor 291 executes functional applications and data processing, i.e. implementing the method in the method embodiments by running software programs, instructions and modules stored in the memory 292.

The memory 292 can include a program storage area and a data storage area, where the program storage area can store an operating system and the application program required by at least one function; and the data storage area can store data created according to the use of terminal devices. Furthermore, the memory 292 can include a high-speed random access memory, and can also include a non-volatile memory.

An embodiment of the present application further provides a computer readable storage medium, where the computer readable storage medium stores computer execution instructions, and the computer execution instructions, when being invoked, are used to implement the method as described in any one of the embodiments.

An embodiment of the present application further discloses a computer program product, where the computer program product includes a non-transient computer readable storage medium storing computer programs, and the computer programs can be operated to cause a computer to execute steps in the method as described in any one of the embodiments.

The apparatus embodiments described above are only illustrative; and the modules serving as separate components may or may not be physically separated, and the components serving as module display may or may not be physical modules, that is, the modules may be located in one place or may be distributed on a plurality of network modules. Some or all of the modules may be selected according to actual needs to achieve the purposes of the solutions of the embodiments. The solutions can be understood and implemented by those ordinary skilled in the art without creative labor.

Through the above description of the embodiments, those skilled in the art can clearly know that each embodiment can be implemented by virtue of software with necessary universal hardware platform, and of course, can also be implemented by virtue of hardware. Based on the understanding, the essence of the above technical solution or the part contributed to the prior art can be embodied in the form of a software product; and the software product can be stored in a computer readable storage medium including a Read-Only Memory (ROM), a Random Access Memory (RAM), a Programmable Read-only Memory (PROM), an erasable programmable read-only memory (EPROM), a one-time programmable read-only memory (OTPROM), an electrically erasable programmable read-only memory (EEPROM), a Compact Disc Read-Only Memory (CD-ROM) or other optical disc, magnetic disk, magnetic tapes, or any other computer readable medium that can be used to carry or store data.

The specification and embodiments are only regarded as being exemplary. The actual scope of the present application is defined by the claims.

It should be understood that the present application is not limited to the precise structure described above and shown in the accompanying drawings, and various modifications and changes can be made without departing from the scope. The scope of the present application should be defined only by the appended claims.

## Claims

1. A cell safety prediction method, comprising:
determining (101) a first environmental parameter of a target area, performing a first thermal runaway operation on a target cell according to the first environmental parameter until a thermal runaway phenomenon occurs in the target cell, and obtaining a first state parameter of the target cell during the first thermal runaway operation;
determining (102) a target heat production model corresponding to each target cell according to the first state parameter, wherein the target heat production model is used to indicate a quantity of heat production of each target cell under a preset working parameter;
establishing (103) a structural model of a target battery pack, performing a second thermal runaway operation on the structural model, and determining a second state parameter of each target cell according to each target heat production model during the second thermal runaway operation; and
determining (104) safety of the target battery pack according to the second state parameter, wherein the second state parameter is used to indicate a thermal runaway condition of each target cell;
**characterized in that** the first environmental parameter comprises a thermal insulation parameter, and the thermal insulation parameter is used to indicate an environmental parameter for a situation in which a thermal insulation condition is maintained in the target area;
before the determining (101) the first environmental parameter of the target area, and performing the first thermal runaway operation on the target cell according to the first environmental parameter until the thermal runaway phenomenon occurs in the target cell, the method further comprises:
charging the target cell until each target cell is in a fully-charged state;
determining a plurality of first measurement points associated with the target cell; and
wherein the first measurement point is used to obtain a temperature parameter of each target cell; and
the determining (101) the first environmental parameter of the target area, and performing the first thermal runaway operation on the target cell according to the first environmental parameter until the thermal runaway phenomenon occurs in the target cell comprises:
determining the first environmental parameter of the target area, and performing the first thermal runaway operation on the target cell according to the first environmental parameter;
determining whether the thermal runaway phenomenon occurs in the target cell according to the temperature parameter corresponding to each first measurement point; and
if the thermal runaway phenomenon does not occur in the target cell, adjusting the first environmental parameter according to a preset environmental parameter change gradient until the thermal runaway phenomenon occurs in the target cell.

2. The method according to claim 1, wherein the first state parameter comprises one or more of the following: a cell surface temperature, a charging current and a cell voltage, the target heat production model comprises a target overcharging model, and the determining (102) the target heat production model corresponding to each target cell according to the first state parameter comprises:
establishing a single cell overcharging model corresponding to each target cell according to the first state parameter, and determining a third state parameter in each single cell overcharging model;
wherein the single cell overcharging model comprises an electrochemical reaction heat production model and a decomposition reaction heat production model; and
optimizing each third state parameter to obtain a target state parameter, and determining the target overcharging model corresponding to each target cell according to the target state parameter and each single cell overcharging model.

3. The method according to claim 2, wherein the optimizing each third state parameter to obtain the target state parameter comprises:
determining a target boundary and a target order of magnitude of each third state parameter;
determining a state parameter change gradient corresponding to each third state parameter according to the target order of magnitude of each third state parameter;
adjusting each third state parameter in the target boundary according to the state parameter change gradient corresponding to each third state parameter;
under different values of each third state parameter, determining a measured value of a cell surface temperature corresponding to each target cell, and a calculated value of the cell surface temperature corresponding to each target cell calculated according to the single cell overcharging model;
determining a first thermal runaway initial temperature according to the measured value, determining a second thermal runaway initial temperature according to the calculated value, determining a thermal runaway initial temperature difference according to the first thermal runaway initial temperature and the second thermal runaway initial temperature, and determining a sum of squares of the difference according to the measured value and the calculated value; and
determining candidate parameter values of the third state parameter under a condition that the sum of squares of the difference is less than a preset threshold of the sum of squares, and/or the thermal runaway initial temperature difference is less than a preset difference threshold, and determining the target state parameter from the candidate parameter values.

4. The method according to claim 2, wherein the establishing (103) the structural model of the target battery pack, and performing the second thermal runaway operation on the structural model comprises:
determining an electrical component structure and a mechanical component structure of the target battery pack, and establishing the structural model of the target battery pack according to the electrical component structure and the mechanical component structure;
wherein the electrical component structure comprises a cell structure and a connection bank structure;
establishing a first heat production model corresponding to the cell structure according to the target overcharging model of each target cell; determining a quantity of ohmic heat production corresponding to the connection bank structure, and establishing a second heat production model; and determining a convective heat transfer coefficient and a radiation emissivity corresponding to the mechanical component structure, and establishing a third heat production model; and
performing simulative overcharging on the structural model according to a target charging time and a target charging current to perform the second thermal runaway operation, and determining a thermal runaway condition;
wherein the thermal runaway condition is associated with the first heat production model, the second heat production model and the third heat production model and used to indicate a corresponding thermal physical condition under which the safety of the target battery pack meets a preset safety requirement.

5. A cell safety prediction apparatus, comprising:
a determination module (31), configured to determine a first environmental parameter of a target area;
a processing module (32), configured to perform a first thermal runaway operation on a target cell according to the first environmental parameter until a thermal runaway phenomenon occurs in the target cell, and obtain a first state parameter of the target cell during the first thermal runaway operation;
wherein the processing module (32) is further configured to determine a target heat production model corresponding to each target cell according to the first state parameter, wherein the target heat production model is used to indicate a quantity of heat production of each target cell under a preset working parameter;
the processing module (32) is further configured to establish a structural model of a target battery pack, perform a second thermal runaway operation on the structural model, and determine a second state parameter of each target cell according to each target heat production model during the second thermal runaway operation; and
the processing module (32) is further configured to determine safety of the target battery pack according to the second state parameter, wherein the second state parameter is used to indicate a thermal runaway condition of each target cell;
**characterized in that** the first environmental parameter comprises a thermal insulation parameter, and the thermal insulation parameter is used to indicate an environmental parameter for a situation in which a thermal insulation condition is maintained in the target area;
before the determination module (31) determines the first environmental parameter of the target area, the processing module (32) is further configured to:
charge the target cell until each target cell is in a fully-charged state;
determine a plurality of first measurement points associated with the target cell; and
wherein the first measurement point is used to obtain a temperature parameter of each target cell; and
a specific way in which the processing module (32) performs the first thermal runaway operation on the target cell according to the first environmental parameter until the thermal runaway phenomenon occurs in the target cell after the determination module (31) determines the first environmental parameter of the target area comprises:
determining the first environmental parameter of the target area, and performing the first thermal runaway operation on the target cell according to the first environmental parameter;
determining whether the thermal runaway phenomenon occurs in the target cell according to the temperature parameter corresponding to each first measurement point; and
if the thermal runaway phenomenon does not occur in the target cell, adjusting the first environmental parameter according to a preset environmental parameter change gradient until the thermal runaway phenomenon occurs in the target cell.

6. The apparatus according to claim 5, wherein the first state parameter comprises one or more of the following: a cell surface temperature, a charging current and a cell voltage, the target heat production model comprises a target overcharging model, and a specific way in which the processing module (32) determines the target heat production model corresponding to each target cell according to the first state parameter comprises:
establishing a single cell overcharging model corresponding to each target cell according to the first state parameter, and determining a third state parameter in each single cell overcharging model;
wherein the single cell overcharging model comprises an electrochemical reaction heat production model and a decomposition reaction heat production model; and
optimizing each third state parameter to obtain a target state parameter, and determining the target overcharging model corresponding to each target cell according to the target state parameter and each single cell overcharging model.

7. The apparatus according to claim 6, wherein a specific way in which the processing module (32) optimizes each third state parameter to obtain the target state parameter comprises:
determining a target boundary and a target order of magnitude of each third state parameter;
determining a state parameter change gradient corresponding to each third state parameter according to the target order of magnitude of each third state parameter;
adjusting each third state parameter in the target boundary according to the state parameter change gradient corresponding to each third state parameter;
under different values of each third state parameter, determining a measured value of a cell surface temperature corresponding to each target cell, and a calculated value of the cell surface temperature corresponding to each target cell calculated according to the single cell overcharging model;
determining a first thermal runaway initial temperature according to the measured value, determining a second thermal runaway initial temperature according to the calculated value, determining a thermal runaway initial temperature difference according to the first thermal runaway initial temperature and the second thermal runaway initial temperature, and determining a sum of squares of the difference according to the measured value and the calculated value; and
determining candidate parameter values of the third state parameter under a condition that the sum of squares of the difference is less than a preset threshold of the sum of squares, and/or the thermal runaway initial temperature difference is less than a preset difference threshold, and determining the target state parameter from the candidate parameter values.

8. The apparatus according to claim 6, wherein a specific way in which the processing module (32) establishes the structural model of the target battery pack, and performs the second thermal runaway operation on the structural model comprises:
determining an electrical component structure and a mechanical component structure of the target battery pack, and establishing the structural model of the target battery pack according to the electrical component structure and the mechanical component structure;
wherein the electrical component structure comprises a cell structure and a connection bank structure;
establishing a first heat production model corresponding to the cell structure according to the target overcharging model of each target cell; determining a quantity of ohmic heat production corresponding to the connection bank structure, and establishing a second heat production model; and determining a convective heat transfer coefficient and a radiation emissivity corresponding to the mechanical component structure, and establishing a third heat production model; and
performing simulative overcharging on the structural model according to a target charging time and a target charging current to perform the second thermal runaway operation, and determining a thermal runaway condition;
wherein the thermal runaway condition is associated with the first heat production model, the second heat production model and the third heat production model and used to indicate a corresponding thermal physical condition under which the safety of the target battery pack meets a preset safety requirement.

9. A computer readable storage medium, wherein the computer readable storage medium stores computer execution instructions, and a processor, when executing the computer execution instructions, is configured to:
determine a first environmental parameter of a target area;
perform a first thermal runaway operation on a target cell according to the first environmental parameter until a thermal runaway phenomenon occurs in the target cell, and obtain a first state parameter of the target cell during the first thermal runaway operation;
determine a target heat production model corresponding to each target cell according to the first state parameter, wherein the target heat production model is used to indicate a quantity of heat production of each target cell under a preset working parameter;
establish a structural model of a target battery pack, perform a second thermal runaway operation on the structural model, and determine a second state parameter of each target cell according to each target heat production model during the second thermal runaway operation; and
determine safety of the target battery pack according to the second state parameter, wherein the second state parameter is used to indicate a thermal runaway condition of each target cell;
**characterized in that** the first environmental parameter comprises a thermal insulation parameter, and the thermal insulation parameter is used to indicate an environmental parameter for a situation in which a thermal insulation condition is maintained in the target area;
before determining the first environmental parameter of the target area, the processor is further configured to:
charge the target cell until each target cell is in a fully-charged state;
determine a plurality of first measurement points associated with the target cell; and
wherein the first measurement point is used to obtain a temperature parameter of each target cell; and
a specific way in which the processor performs the first thermal runaway operation on the target cell according to the first environmental parameter until the thermal runaway phenomenon occurs in the target cell after determining the first environmental parameter of the target area comprises:
determining the first environmental parameter of the target area, and performing the first thermal runaway operation on the target cell according to the first environmental parameter;
determining whether the thermal runaway phenomenon occurs in the target cell according to the temperature parameter corresponding to each first measurement point; and
if the thermal runaway phenomenon does not occur in the target cell, adjusting the first environmental parameter according to a preset environmental parameter change gradient until the thermal runaway phenomenon occurs in the target cell.

10. The computer readable storage medium according to claim 9, wherein the first state parameter comprises one or more of the following: a cell surface temperature, a charging current and a cell voltage, the target heat production model comprises a target overcharging model, and a specific way in which the processor determines the target heat production model corresponding to each target cell according to the first state parameter comprises:
establishing a single cell overcharging model corresponding to each target cell according to the first state parameter, and determining a third state parameter in each single cell overcharging model;
wherein the single cell overcharging model comprises an electrochemical reaction heat production model and a decomposition reaction heat production model; and
optimizing each third state parameter to obtain a target state parameter, and determining the target overcharging model corresponding to each target cell according to the target state parameter and each single cell overcharging model.

11. The computer readable storage medium according to claim 10, wherein a specific way in which the processor optimizes each third state parameter to obtain the target state parameter comprises:
determining a target boundary and a target order of magnitude of each third state parameter;
determining a state parameter change gradient corresponding to each third state parameter according to the target order of magnitude of each third state parameter;
adjusting each third state parameter in the target boundary according to the state parameter change gradient corresponding to each third state parameter;
under different values of each third state parameter, determining a measured value of a cell surface temperature corresponding to each target cell, and a calculated value of the cell surface temperature corresponding to each target cell calculated according to the single cell overcharging model;
determining a first thermal runaway initial temperature according to the measured value, determining a second thermal runaway initial temperature according to the calculated value, determining a thermal runaway initial temperature difference according to the first thermal runaway initial temperature and the second thermal runaway initial temperature, and determining a sum of squares of the difference according to the measured value and the calculated value; and
determining candidate parameter values of the third state parameter under a condition that the sum of squares of the difference is less than a preset threshold of the sum of squares, and/or the thermal runaway initial temperature difference is less than a preset difference threshold, and determining the target state parameter from the candidate parameter values.

12. The computer readable storage medium according to claim 10, wherein a specific way in which the processor establishes the structural model of the target battery pack, and performs the second thermal runaway operation on the structural model comprises:
determining an electrical component structure and a mechanical component structure of the target battery pack, and establishing the structural model of the target battery pack according to the electrical component structure and the mechanical component structure;
wherein the electrical component structure comprises a cell structure and a connection bank structure;
establishing a first heat production model corresponding to the cell structure according to the target overcharging model of each target cell; determining a quantity of ohmic heat production corresponding to the connection bank structure, and establishing a second heat production model; and determining a convective heat transfer coefficient and a radiation emissivity corresponding to the mechanical component structure, and establishing a third heat production model; and
performing simulative overcharging on the structural model according to a target charging time and a target charging current to perform the second thermal runaway operation, and determining a thermal runaway condition;
wherein the thermal runaway condition is associated with the first heat production model, the second heat production model and the third heat production model and used to indicate a corresponding thermal physical condition under which the safety of the target battery pack meets a preset safety requirement.

## Patentansprüche

1. Verfahren zur Vorhersage der Zellsicherheit, umfassend:
Bestimmen (101) eines ersten Umgebungsparameters eines Zielbereichs, Durchführen eines ersten Vorgangs des thermischen Durchgehens an einer Zielzelle gemäß dem ersten Umgebungsparameter, bis ein Phänomen des thermischen Durchgehens in der Zielzelle auftritt, und Erhalten eines ersten Zustandsparameters der Zielzelle während des ersten Vorgangs des thermischen Durchgehens;
Bestimmen (102) eines jeder Zielzelle entsprechenden Zielwärmeerzeugungsmodells gemäß dem ersten Zustandsparameter, wobei das Zielwärmeerzeugungsmodell verwendet wird, um die Wärmeerzeugungsmenge jeder Zielzelle bei einem voreingestellten Betriebsparameter anzuzeigen;
Erstellen (103) eines Strukturmodells eines Zielbatteriepacks, Durchführen eines zweiten Vorgangs des thermischen Durchgehens an dem Strukturmodell, und Bestimmen eines zweiten Zustandsparameters jeder Zielzelle gemäß dem jeweiligen Zielwärmeerzeugungsmodell während des zweiten Vorgangs des thermischen Durchgehens; und
Bestimmen (104) der Sicherheit des Zielbatteriepacks gemäß dem zweiten Zustandsparameter, wobei der zweite Zustandsparameter verwendet wird, um einen Zustand des thermischen Durchgehens jeder Zielzelle anzuzeigen;
**dadurch gekennzeichnet, dass** der erste Umgebungsparameter einen Wärmedämmungsparameter umfasst und der Wärmedämmungsparameter verwendet wird, um einen Umgebungsparameter für eine Situation anzuzeigen, in der im Zielbereich ein Wärmedämmungszustand aufrechterhalten wird;
vor dem Bestimmen (101) des ersten Umgebungsparameters des Zielbereichs und dem Durchführen des ersten Vorgangs des thermischen Durchgehens an der Zielzelle gemäß dem ersten Umgebungsparameter, bis das Phänomen des thermischen Durchgehens in der Zielzelle auftritt, umfasst das Verfahren ferner:
Laden der Zielzelle, bis sich jede Zielzelle in einem vollständig geladenen Zustand befindet;
Bestimmen einer Vielzahl von ersten Messpunkten, die der Zielzelle zugeordnet sind; und
wobei der erste Messpunkt verwendet wird, um einen Temperaturparameter jeder Zielzelle zu erhalten; und
das Bestimmen (101) des ersten Umgebungsparameters des Zielbereichs und das Durchführen des ersten Vorgangs des thermischen Durchgehens an der Zielzelle gemäß dem ersten Umgebungsparameter, bis das Phänomen des thermischen Durchgehens in der Zielzelle auftritt, Folgendes umfasst:
Bestimmen des ersten Umgebungsparameters des Zielbereichs, und Durchführen des ersten Vorgangs des thermischen Durchgehens an der Zielzelle gemäß dem ersten Umgebungsparameter;
Bestimmen, ob das Phänomen des thermischen Durchgehens in der Zielzelle gemäß dem Temperaturparameter, der jeweils dem ersten Messpunkt entspricht, auftritt; und
falls das Phänomen des thermischen Durchgehens in der Zielzelle nicht auftritt, Anpassen des ersten Umgebungsparameters gemäß einem voreingestellten Änderungsgradienten des Umgebungsparameters, bis das Phänomen des thermischen Durchgehens in der Zielzelle auftritt.

2. Verfahren nach Anspruch 1, wobei der erste Zustandsparameter eines oder mehrere der folgenden Elemente umfasst: eine Zellenoberflächentemperatur, einen Ladestrom und eine Zellspannung, wobei das Zielwärmeerzeugungsmodell ein Zielüberladungsmodell umfasst, und das Bestimmen (102) des jeder Zielzelle entsprechenden Zielwärmeerzeugungsmodells gemäß dem ersten Zustandsparameter Folgendes umfasst:
Erstellen eines jeder Zielzelle entsprechenden Einzelzellen-Überladungsmodells gemäß dem ersten Zustandsparameter, und Bestimmen eines dritten Zustandsparameters in jedem Einzelzellen-Überladungsmodell;
wobei das Einzelzellen-Überladungsmodell ein Modell für die Wärmeerzeugung bei elektrochemischen Reaktionen sowie ein Wärmeerzeugungsmodell für Zersetzungsreaktionen umfasst; und
Optimieren jedes dritten Zustandsparameters, um einen Zielzustandsparameter zu erhalten, und Bestimmen des der jeweiligen Zielzelle entsprechenden Zielüberladungsmodells gemäß dem Zielzustandsparameter und jedem Einzelzellen-Überladungsmodell.

3. Verfahren nach Anspruch 2, wobei das Optimieren jedes dritten Zustandsparameters zum Erhalten des Zielzustandsparameters Folgendes umfasst:
Bestimmen einer Zielgrenze und einer Zielgrößenordnung für jeden dritten Zustandsparameter;
Bestimmen eines jedem dritten Zustandsparameter entsprechenden Änderungsgradienten des Zustandsparameters gemäß der Zielgrößenordnung jedes dritten Zustandsparameters;
Anpassen jedes dritten Zustandsparameters innerhalb der Zielgrenze gemäß dem Änderungsgradienten des Zustandsparameters, der jedem dritten Zustandsparameter entspricht;
bei unterschiedlichen Werten jedes dritten Zustandsparameters, Bestimmen eines Messwerts einer Zellenoberflächentemperatur entsprechend jeder Zielzelle, und eines berechneten Werts der Zellenoberflächentemperatur entsprechend jeder Zielzelle, berechnet gemäß dem Einzelzellen-Überladungsmodell;
Bestimmen einer ersten Anfangstemperatur für das thermische Durchgehen gemäß dem Messwert, Bestimmen einer zweiten Anfangstemperatur für das thermische Durchgehen gemäß dem berechneten Wert, Bestimmen einer Anfangstemperaturdifferenz für das thermische Durchgehen gemäß der ersten Anfangstemperatur für das thermische Durchgehen und der zweiten Anfangstemperatur für das thermische Durchgehen, und Bestimmen einer Quadratsumme der Differenz gemäß dem Messwert und dem berechneten Wert; und
Bestimmen von Kandidatenparameterwerten für den dritten Zustandsparameter unter der Bedingung, dass die Quadratsumme der Differenz kleiner ist als ein voreingestellter Schwellenwert der Quadratsumme und/oder die Anfangstemperaturdifferenz für das thermische Durchgehen kleiner ist als ein voreingestellter Differenzschwellenwert, und
Bestimmen des Zielzustandsparameters aus den Kandidatenparameterwerten.

4. Verfahren nach Anspruch 2, wobei das Erstellen (103) des Strukturmodells des Zielbatteriepacks und das Durchführen des zweiten Vorgangs des thermischen Durchgehens an dem Strukturmodell Folgendes umfasst:
Bestimmen einer elektrischen Komponentenstruktur und einer mechanischen Komponentenstruktur des Zielbatteriepacks, und Erstellen des Strukturmodells des Zielbatteriepacks gemäß der elektrischen Komponentenstruktur und der mechanischen Komponentenstruktur;
wobei die elektrische Komponentenstruktur eine Zellstruktur und eine Verbindungsbankstruktur umfasst;
Erstellen eines ersten Wärmeerzeugungsmodells entsprechend der Zellstruktur gemäß dem Zielüberladungsmodell jeder Zielzelle; Bestimmen einer Menge an ohmscher Wärmeerzeugung entsprechend der Verbindungsbankstruktur, und Erstellen eines zweiten Wärmeerzeugungsmodells; und Bestimmen eines konvektiven Wärmeübergangskoeffizienten und einer Strahlungsemissivität entsprechend der mechanischen Komponentenstruktur, und Erstellen eines dritten Wärmeerzeugungsmodells; und
Durchführen einer simulativen Überladung am Strukturmodell gemäß einer Zielladezeit und einem Zielladestrom, um den zweiten Vorgang des thermischen Durchgehens durchzuführen, und Bestimmen eines Zustands des thermischen Durchgehens;
wobei der Zustand des thermischen Durchgehens mit dem ersten Wärmeerzeugungsmodell, dem zweiten Wärmeerzeugungsmodell und dem dritten Wärmeerzeugungsmodell verbunden ist und verwendet wird, um einen entsprechenden thermophysikalischen Zustand anzuzeigen, bei dem die Sicherheit des Zielbatteriepacks eine voreingestellte Sicherheitsanforderung erfüllt.

5. Vorrichtung zur Vorhersage der Zellsicherheit, umfassend:
ein Bestimmungsmodul (31), das so konfiguriert ist, dass es einen ersten Umgebungsparameter eines Zielbereichs bestimmt;
ein Verarbeitungsmodul (32), das so konfiguriert ist, dass es einen ersten Vorgang des thermischen Durchgehens an einer Zielzelle gemäß dem ersten Umgebungsparameter durchführt, bis ein Phänomen des thermischen Durchgehens in der Zielzelle auftritt, und Erhalten eines ersten Zustandsparameters der Zielzelle während des ersten Vorgangs des thermischen Durchgehens;
wobei das Verarbeitungsmodul (32) ferner so konfiguriert ist, dass es ein jeder Zielzelle entsprechendes Zielwärmeerzeugungsmodell gemäß dem ersten Zustandsparameter bestimmt, wobei das Zielwärmeerzeugungsmodell verwendet wird, um die Wärmeerzeugungsmenge jeder Zielzelle bei einem voreingestellten Arbeitsparameter anzuzeigen;
das Verarbeitungsmodul (32) ferner dazu konfiguriert ist, ein Strukturmodell eines Zielbatteriepacks zu erstellen, einen zweiten Vorgang des thermischen Durchgehens an dem Strukturmodell durchzuführen und während des zweiten Vorgangs des thermischen Durchgehens einen zweiten Zustandsparameter jeder Zielzelle gemäß dem jeweiligen Zielwärmeerzeugungsmodell zu bestimmen; und
das Verarbeitungsmodul (32) ferner so konfiguriert ist, dass es die Sicherheit des Zielbatteriepacks gemäß dem zweiten Zustandsparameter bestimmt, wobei der zweite Zustandsparameter verwendet wird, um einen Zustand des thermischen Durchgehens jeder Zielzelle anzuzeigen;
**dadurch gekennzeichnet, dass** der erste Umgebungsparameter einen Wärmedämmungsparameter umfasst und der Wärmeisolationsparameter verwendet wird, um einen Umgebungsparameter für eine Situation anzuzeigen, in der im Zielbereich ein Wärmedämmungszustand aufrechterhalten wird;
bevor das Bestimmungsmodul (31) den ersten Umgebungsparameter des Zielbereichs bestimmt, ist das Verarbeitungsmodul (32) ferner konfiguriert zum:
Laden der Zielzelle, bis sich jede Zielzelle in einem vollständig geladenen Zustand befindet;
Bestimmen einer Vielzahl von ersten Messpunkten, die der Zielzelle zugeordnet sind; und
wobei der erste Messpunkt verwendet wird, um einen Temperaturparameter jeder Zielzelle zu erhalten; und
eine spezifische Vorgehensweise, bei der das Verarbeitungsmodul (32) den ersten Vorgang des thermischen Durchgehens an der Zielzelle gemäß dem ersten Umgebungsparameter durchführt, bis das Phänomen des thermischen Durchgehens in der Zielzelle auftritt, nachdem das Bestimmungsmodul (31) den ersten Umgebungsparameter des Zielbereichs bestimmt hat, Folgendes umfasst:
Bestimmen des ersten Umgebungsparameters des Zielbereichs, und Durchführen des ersten Vorgangs des thermischen Durchgehens an der Zielzelle gemäß dem ersten Umgebungsparameter;
Bestimmen, ob das Phänomen des thermischen Durchgehens in der Zielzelle gemäß dem Temperaturparameter, der jeweils dem ersten Messpunkt entspricht, auftritt; und
falls das Phänomen des thermischen Durchgehens in der Zielzelle nicht auftritt, Anpassen des ersten Umgebungsparameters gemäß einem voreingestellten Änderungsgradienten des Umgebungsparameters, bis das Phänomen des thermischen Durchgehens in der Zielzelle auftritt.

6. Vorrichtung nach Anspruch 5, wobei der erste Zustandsparameter eines oder mehrere der folgenden Elemente umfasst: eine Zellenoberflächentemperatur, einen Ladestrom und eine Zellspannung, wobei das Zielwärmeerzeugungsmodell ein Zielüberladungsmodell umfasst, und eine spezifische Vorgehensweise, bei der das Verarbeitungsmodul (32) das jeder Zielzelle entsprechende Zielwärmeerzeugungsmodell gemäß dem ersten Zustandsparameter bestimmt, Folgendes umfasst:
Erstellen eines jeder Zielzelle entsprechenden Einzelzellen-Überladungsmodells gemäß dem ersten Zustandsparameter, und Bestimmen eines dritten Zustandsparameters in jedem Einzelzellen-Überladungsmodell;
wobei das Einzelzellen-Überladungsmodell ein Modell für die Wärmeerzeugung bei elektrochemischen Reaktionen sowie ein Wärmeerzeugungsmodell für Zersetzungsreaktionen umfasst; und
Optimieren jedes dritten Zustandsparameters, um einen Zielzustandsparameter zu erhalten, und Bestimmen des jeder Zielzelle entsprechenden Zielüberladungsmodells gemäß dem Zielzustandsparameter und jedem Einzelzellen-Überladungsmodell.

7. Vorrichtung nach Anspruch 6, wobei eine spezifische Vorgehensweise, bei der das Verarbeitungsmodul (32) jeden dritten Zustandsparameter optimiert, um den Zielzustandsparameter zu erhalten, Folgendes umfasst:
Bestimmen einer Zielgrenze und einer Zielgrößenordnung für jeden dritten Zustandsparameter;
Bestimmen eines jedem dritten Zustandsparameter entsprechenden Änderungsgradienten des Zustandsparameters gemäß der Zielgrößenordnung jedes dritten Zustandsparameters;
Anpassen jedes dritten Zustandsparameters innerhalb der Zielgrenze gemäß dem jedem dritten Zustandsparameter entsprechenden Änderungsgradienten des Zustandsparameters;
bei unterschiedlichen Werten jedes dritten Zustandsparameters, Bestimmen eines Messwerts einer jeder Zielzelle entsprechenden Zelloberflächentemperatur und eines berechneten Werts der jeder Zielzelle entsprechenden Zellenoberflächentemperatur, berechnet gemäß dem Einzelzellen-Überladungsmodell;
Bestimmen einer ersten Anfangstemperatur für das thermische Durchgehen gemäß dem Messwert, Bestimmen einer zweiten Anfangstemperatur für das thermische Durchgehen gemäß dem berechneten Wert, Bestimmen einer Anfangstemperaturdifferenz für das thermische Durchgehen gemäß der ersten Anfangstemperatur für das thermische Durchgehen und der zweiten Anfangstemperatur für das thermische Durchgehen, und Bestimmen einer Quadratsumme der Differenz gemäß dem Messwert und dem berechneten Wert; und
Bestimmen von Kandidatenparameterwerten für den dritten Zustandsparameter unter der Bedingung, dass die Quadratsumme der Differenz kleiner ist als ein voreingestellter Schwellenwert der Quadratsumme und/oder die Anfangstemperaturdifferenz für das thermische Durchgehen kleiner ist als ein voreingestellter Differenzschwellenwert, und
Bestimmen des Zielzustandsparameters aus den Kandidatenparameterwerten.

8. Vorrichtung nach Anspruch 6, wobei eine spezifische Vorgehensweise, bei der das Verarbeitungsmodul (32) das Strukturmodell des Zielbatteriepacks erstellt und den zweiten Vorgang des thermischen Durchgehens an dem Strukturmodell durchführt, Folgendes umfasst:
Bestimmen einer elektrischen Komponentenstruktur und einer mechanischen Komponentenstruktur des Zielbatteriepacks, und Erstellen des Strukturmodells des Zielbatteriepacks gemäß der elektrischen Komponentenstruktur und der mechanischen Komponentenstruktur;
wobei die elektrische Komponentenstruktur eine Zellstruktur und eine Verbindungsbankstruktur umfasst;
Erstellen eines ersten Wärmeerzeugungsmodells entsprechend der Zellstruktur gemäß dem Zielüberladungsmodell jeder Zielzelle; Bestimmen einer Menge an ohmscher Wärmeerzeugung entsprechend der Verbindungsbankstruktur, und Erstellen eines zweiten Wärmeerzeugungsmodells; und Bestimmen eines konvektiven Wärmeübergangskoeffizienten und einer Strahlungsemissivität entsprechend der mechanischen Komponentenstruktur, und Erstellen eines dritten Wärmeerzeugungsmodells; und
Durchführen einer simulativen Überladung am Strukturmodell gemäß einer Zielladezeit und einem Zielladestrom, um den zweiten Vorgang des thermischen Durchgehens durchzuführen, und Bestimmen eines Zustands des thermischen Durchgehens;
wobei der Zustand des thermischen Durchgehens mit dem ersten Wärmeerzeugungsmodell, dem zweiten Wärmeerzeugungsmodell und dem dritten Wärmeerzeugungsmodell verbunden ist und verwendet wird, um einen entsprechenden thermophysikalischen Zustand anzuzeigen, bei dem die Sicherheit des Zielbatteriepacks eine voreingestellte Sicherheitsanforderung erfüllt.

9. Computerlesbares Speichermedium, wobei das computerlesbare Speichermedium Computerausführungsbefehle speichert und ein Prozessor bei der Durchführung der Computerausführungsbefehle konfiguriert ist zum:
Bestimmen eines ersten Umgebungsparameters eines Zielbereichs;
Durchführen eines ersten Vorgangs des thermischen Durchgehens an einer Zielzelle gemäß dem ersten Umgebungsparameter, bis in der Zielzelle ein Phänomen des thermischen Durchgehens auftritt, und Erhalten eines ersten Zustandsparameters der Zielzelle während des ersten Vorgangs des thermischen Durchgehens;
Bestimmen eines jeder Zielzelle entsprechenden Zielwärmeerzeugungsmodells gemäß dem ersten Zustandsparameter, wobei das Zielwärmeerzeugungsmodell verwendet wird, um die Wärmeerzeugungsmenge jeder Zielzelle bei einem voreingestellten Betriebsparameter anzuzeigen;
Erstellen eines Strukturmodells eines Zielbatteriepacks, Durchführen eines zweiten Vorgangs des thermischen Durchgehens an dem Strukturmodell, und Bestimmen eines zweiten Zustandsparameters jeder Zielzelle gemäß dem jeweiligen Zielwärmeerzeugungsmodell während des zweiten Vorgangs des thermischen Durchgehens; und
Bestimmen der Sicherheit des Zielbatteriepacks gemäß des zweiten Zustandsparameters, wobei der zweite Zustandsparameter verwendet wird, um einen Zustand des thermischen Durchgehens jeder Zielzelle anzuzeigen;
**dadurch gekennzeichnet, dass** der erste Umgebungsparameter einen Wärmedämmungsparameter umfasst und der Wärmedämmungsparameter verwendet wird, um einen Umgebungsparameter für eine Situation anzuzeigen, in der im Zielbereich ein Wärmedämmungszustand aufrechterhalten wird;
vor dem Bestimmen des ersten Umgebungsparameters des Zielbereichs ist der Prozessor ferner konfiguriert zum:
Laden der Zielzelle, bis sich jede Zielzelle in einem vollständig geladenen Zustand befindet;
Bestimmen einer Vielzahl von ersten Messpunkten, die der Zielzelle zugeordnet sind; und
wobei der erste Messpunkt verwendet wird, um einen Temperaturparameter jeder Zielzelle zu erhalten; und
eine spezifische Vorgehensweise, bei der der Prozessor den ersten Vorgang des thermischen Durchgehens an der Zielzelle gemäß dem ersten Umgebungsparameter durchführt, bis das Phänomen des thermischen Durchgehens in der Zielzelle auftritt, nachdem der erste Umgebungsparameter des Zielbereichs bestimmt wurde, Folgendes umfasst:
Bestimmen des ersten Umgebungsparameters des Zielbereichs, und Durchführen des ersten Vorgangs des thermischen Durchgehens an der Zielzelle gemäß dem ersten Umgebungsparameter;
Bestimmen, ob das Phänomen des thermischen Durchgehens in der Zielzelle gemäß dem jedem ersten Messpunkt entsprechenden Temperaturparameter auftritt; und
falls das Phänomen des thermischen Durchgehens in der Zielzelle nicht auftritt, Anpassen des ersten Umgebungsparameters gemäß einem voreingestellten Änderungsgradienten des Umgebungsparameters, bis das Phänomen des thermischen Durchgehens in der Zielzelle auftritt.

10. Computerlesbares Speichermedium nach Anspruch 9, wobei der erste Zustandsparameter eines oder mehrere der folgenden Elemente umfasst: eine Zellenoberflächentemperatur, einen Ladestrom und eine Zellspannung, wobei das Zielwärmeerzeugungsmodell ein Zielüberladungsmodell umfasst und eine spezifische Vorgehensweise, bei der der Prozessor das jeder Zielzelle entsprechende Zielwärmeerzeugungsmodell gemäß dem ersten Zustandsparameter bestimmt, Folgendes umfasst:
Erstellen eines jeder Zielzelle entsprechenden Einzelzellen-Überladungsmodells gemäß dem ersten Zustandsparameter, und Bestimmen eines dritten Zustandsparameters in jedem Einzelzellen-Überladungsmodell;
wobei das Einzelzellen-Überladungsmodell ein Modell für die Wärmeerzeugung bei elektrochemischen Reaktionen sowie ein Wärmeerzeugungsmodell für Zersetzungsreaktionen umfasst; und
Optimieren jedes dritten Zustandsparameters, um einen Zielzustandsparameter zu erhalten, und Bestimmen des der jeweiligen Zielzelle entsprechenden Zielüberladungsmodells gemäß dem Zielzustandsparameter und jedem Einzelzellen-Überladungsmodell.

11. Computerlesbares Speichermedium nach Anspruch 10, wobei eine spezifische Vorgehensweise, bei der der Prozessor jeden dritten Zustandsparameter optimiert, um den Zielzustandsparameter zu erhalten, Folgendes umfasst:
Bestimmen einer Zielgrenze und einer Zielgrößenordnung für jeden dritten Zustandsparameter;
Bestimmen eines jedem dritten Zustandsparameter entsprechenden Änderungsgradienten des Zustandsparameters gemäß der Zielgrößenordnung jedes dritten Zustandsparameters;
Anpassen jedes dritten Zustandsparameters innerhalb der Zielgrenze gemäß dem Änderungsgradienten des Zustandsparameters, der jedem dritten Zustandsparameter entspricht;
bei unterschiedlichen Werten jedes dritten Zustandsparameters, Bestimmen eines Messwerts einer Zellenoberflächentemperatur entsprechend jeder Zielzelle, und eines berechneten Werts der Zellenoberflächentemperatur entsprechend jeder Zielzelle, berechnet gemäß dem Einzelzellen-Überladungsmodell;
Bestimmen einer ersten Anfangstemperatur für das thermische Durchgehen gemäß dem Messwert, Bestimmen einer zweiten Anfangstemperatur für das thermische Durchgehen gemäß dem berechneten Wert, Bestimmen einer Anfangstemperaturdifferenz für das thermische Durchgehen gemäß der ersten Anfangstemperatur für das thermische Durchgehen und der zweiten Anfangstemperatur für das thermische Durchgehen, und Bestimmen einer Quadratsumme der Differenz gemäß dem Messwert und dem berechneten Wert; und
Bestimmen von Kandidatenparameterwerten für den dritten Zustandsparameter unter der Bedingung, dass die Quadratsumme der Differenz kleiner ist als ein voreingestellter Schwellenwert der Quadratsumme und/oder die Anfangstemperaturdifferenz für das thermische Durchgehen kleiner ist als ein voreingestellter Differenzschwellenwert, und
Bestimmen des Zielzustandsparameters aus den Kandidatenparameterwerten.

12. Computerlesbares Speichermedium nach Anspruch 10, wobei eine spezifische Vorgehensweise, bei der der Prozessor das Strukturmodell des Zielbatteriepacks erstellt und den zweiten Vorgang des thermischen Durchgehens an dem Strukturmodell durchführt, Folgendes umfasst:
Bestimmen einer elektrischen Komponentenstruktur und einer mechanischen Komponentenstruktur des Zielbatteriepacks, und Erstellen des Strukturmodells des Zielbatteriepacks gemäß der elektrischen Komponentenstruktur und der mechanischen Komponentenstruktur;
wobei die elektrische Komponentenstruktur eine Zellstruktur und eine Verbindungsbankstruktur umfasst;
Erstellen eines ersten Wärmeerzeugungsmodells entsprechend der Zellstruktur gemäß dem Zielüberladungsmodell jeder Zielzelle; Bestimmen einer Menge an ohmscher Wärmeerzeugung entsprechend der Verbindungsbankstruktur, und Erstellen eines zweiten Wärmeerzeugungsmodells; und Bestimmen eines konvektiven Wärmeübergangskoeffizienten und einer Strahlungsemissivität entsprechend der mechanischen Komponentenstruktur, und Erstellen eines dritten Wärmeerzeugungsmodells; und
Durchführen einer simulativen Überladung am Strukturmodell gemäß einer Zielladezeit und einem Zielladestrom, um den zweiten Vorgang des thermischen Durchgehens durchzuführen, und Bestimmen eines Zustands des thermischen Durchgehens;
wobei der Zustand des thermischen Durchgehens mit dem ersten Wärmeerzeugungsmodell, dem zweiten Wärmeerzeugungsmodell und dem dritten Wärmeerzeugungsmodell verbunden ist und verwendet wird, um einen entsprechenden thermophysikalischen Zustand anzuzeigen, bei dem die Sicherheit des Zielbatteriepacks eine voreingestellte Sicherheitsanforderung erfüllt.

## Revendications

1. Procédé de prédiction de sécurité d'une cellule, comprenant :
la détermination (101) d'un premier paramètre environnemental d'une zone cible, la réalisation d'une première opération d'emballement thermique sur une cellule cible en fonction du premier paramètre environnemental jusqu'à ce qu'un phénomène d'emballement thermique se produise dans la cellule cible, et l'obtention d'un premier paramètre d'état de la cellule cible pendant la première opération d'emballement thermique,
la détermination (102) d'un modèle de production de chaleur cible correspondant à chaque cellule cible en fonction du premier paramètre d'état, ledit modèle de production de chaleur cible servant à indiquer la quantité de production de chaleur de chaque cellule cible sous un paramètre de fonctionnement prédéfini,
l'établissement (103) d'un modèle structurel d'un bloc-batterie cible, la réalisation d'une deuxième opération d'emballement thermique sur le modèle structurel, et la détermination d'un deuxième paramètre d'état de chaque cellule cible en fonction de chaque modèle de production de chaleur cible au cours de la deuxième opération d'emballement thermique, et
la détermination (104) de la sécurité du bloc-batterie cible en fonction du deuxième paramètre d'état, ledit deuxième paramètre d'état servant à indiquer une condition d'emballement thermique de chaque cellule cible ;
**caractérisé en ce que** le premier paramètre environnemental comprend un paramètre d'isolation thermique, et ledit paramètre d'isolation thermique sert à indiquer un paramètre environnemental relatif à une situation dans laquelle une condition d'isolation thermique est maintenue dans la zone cible ;
avant la détermination (101) du premier paramètre environnemental de la zone cible, et la réalisation de la première opération d'emballement thermique sur la cellule cible en fonction du premier paramètre environnemental jusqu'à ce que le phénomène d'emballement thermique se produise dans la cellule cible, le procédé comprend en outre :
le chargement de la cellule cible jusqu'à ce que chaque cellule cible soit dans un état de charge complète,
la détermination d'une pluralité de premiers points de mesure associés à la cellule cible ; et
le premier point de mesure servant à obtenir un paramètre de température de chaque cellule cible ; et
la détermination (101) du premier paramètre environnemental de la zone cible et la réalisation de la première opération d'emballement thermique sur la cellule cible en fonction du premier paramètre environnemental jusqu'à ce que le phénomène d'emballement thermique se produise dans la cellule cible comprennent :
la détermination du premier paramètre environnemental de la zone cible, et la réalisation de la première opération d'emballement thermique sur la cellule cible en fonction du premier paramètre environnemental,
la détermination du fait que le phénomène d'emballement thermique se produit ou non dans la cellule cible en fonction du paramètre de température correspondant à chaque premier point de mesure, et
si le phénomène d'emballement thermique ne se produit pas dans la cellule cible, l'ajustement du premier paramètre environnemental en fonction d'un gradient de variation de paramètre environnemental prédéfini jusqu'à ce que le phénomène d'emballement thermique se produise dans la cellule cible.

2. Procédé selon la revendication 1, dans lequel le premier paramètre d'état comprend au moins l'un des suivants : la température de surface de cellule, le courant de charge et la tension de cellule ; le modèle de production de chaleur cible comprend un modèle de surcharge cible, et la détermination (102) du modèle de production de chaleur cible correspondant à chaque cellule cible en fonction du premier paramètre d'état comprenant :
l'établissement d'un modèle de surcharge de cellule unique correspondant à chaque cellule cible en fonction du premier paramètre d'état, et la détermination d'un troisième paramètre d'état dans chaque modèle de surcharge de cellule unique,
le modèle de surcharge de cellule unique comprenant un modèle de production de chaleur par réaction électrochimique et un modèle de production de chaleur par réaction de décomposition ; et
l'optimisation de chaque troisième paramètre d'état pour obtenir un paramètre d'état cible, et la détermination du modèle de surcharge cible correspondant à chaque cellule cible en fonction du paramètre d'état cible et de chaque modèle de surcharge de cellule unique.

3. Procédé selon la revendication 2, dans lequel l'optimisation de chaque troisième paramètre d'état pour obtenir le paramètre d'état cible comprend :
la détermination d'une limite cible et d'un ordre de grandeur cible de chaque troisième paramètre d'état,
la détermination d'un gradient de variation de paramètre d'état correspondant à chaque troisième paramètre d'état en fonction de l'ordre de grandeur cible de chaque troisième paramètre d'état,
l'ajustement de chaque troisième paramètre d'état dans la limite cible en fonction du gradient de variation de paramètre d'état correspondant à chaque troisième paramètre d'état,
pour différentes valeurs de chaque troisième paramètre d'état, la détermination d'une valeur mesurée de la température de surface de cellule correspondant à chaque cellule cible, et une valeur calculée de la température de surface de cellule correspondant à chaque cellule cible calculée selon le modèle de surcharge de cellule unique,
la détermination d'une première température initiale d'emballement thermique en fonction de la valeur mesurée, la détermination d'une deuxième température initiale d'emballement thermique en fonction de la valeur calculée, la détermination d'une différence de température initiale d'emballement thermique en fonction de la première température initiale d'emballement thermique et de la deuxième température initiale d'emballement thermique, et la détermination d'une somme des carrés de la différence en fonction de la valeur mesurée et de la valeur calculée, et
la détermination de valeurs de paramètre candidates du troisième paramètre d'état, pour autant que la somme des carrés de la différence soit inférieure à un seuil prédéfini de la somme des carrés et/ou que la différence de température initiale d'emballement thermique soit inférieure à un seuil de différence prédéfini, et la détermination du paramètre d'état cible à partir des valeurs de paramètre candidates.

4. Procédé selon la revendication 2, dans lequel l'établissement (103) du modèle structurel du bloc-batterie cible et la réalisation de la deuxième opération d'emballement thermique sur le modèle structurel comprennent :
la détermination d'une structure de composants électriques et d'une structure de composants mécaniques du bloc-batterie cible, et l'établissement du modèle structurel du bloc-batterie cible en fonction de la structure de composants électriques et de la structure de composants mécaniques,
la structure de composants électriques comprenant une structure de cellules et une structure de banc de connexion,
l'établissement d'un premier modèle de production de chaleur correspondant à la structure de cellules selon le modèle de surcharge cible de chaque cellule cible, la détermination d'une quantité de production de chaleur ohmique correspondant à la structure de banc de connexion et l'établissement d'un deuxième modèle de production de chaleur, et la détermination d'un coefficient de transfert de chaleur par convection et d'une émissivité de rayonnement correspondant à la structure de composants mécaniques, et l'établissement d'un troisième modèle de production de chaleur, et
la réalisation d'une simulation de surcharge sur le modèle structurel en fonction d'un temps de charge cible et d'un courant de charge cible pour réaliser la deuxième opération d'emballement thermique, et la détermination d'une condition d'emballement thermique,
la condition d'emballement thermique étant associée au premier modèle de production de chaleur, au deuxième modèle de production de chaleur et au troisième modèle de production de chaleur et servant à indiquer une condition physique thermique correspondante selon laquelle la sécurité du bloc-batterie cible satisfait une exigence de sécurité prédéfinie.

5. Dispositif de prédiction de sécurité d'une cellule, comprenant :
un module de détermination (31), conçu pour déterminer un premier paramètre environnemental d'une zone cible,
un module de traitement (32), conçu pour réaliser une première opération d'emballement thermique sur une cellule cible en fonction du premier paramètre environnemental jusqu'à ce qu'un phénomène d'emballement thermique se produise dans la cellule cible, et obtenir un premier paramètre d'état de la cellule cible pendant la première opération d'emballement thermique,
le modèle de traitement (32) étant en outre conçu pour déterminer un modèle de production de chaleur cible correspondant à chaque cellule cible en fonction du premier paramètre d'état, ledit modèle de production de chaleur cible servant à indiquer la quantité de production de chaleur de chaque cellule cible sous un paramètre de fonctionnement prédéfini,
le module de traitement (32) étant en outre conçu pour établir un modèle structurel d'un bloc-batterie cible, réaliser une deuxième opération d'emballement thermique sur le modèle structurel, et déterminer un deuxième paramètre d'état de chaque cellule cible en fonction de chaque modèle de production de chaleur cible au cours de la deuxième opération d'emballement thermique, et
le module de traitement (32) étant en outre conçu pour déterminer la sécurité du bloc-batterie cible en fonction du deuxième paramètre d'état, ledit deuxième paramètre d'état servant à indiquer une condition d'emballement thermique de chaque cellule cible ;
**caractérisé en ce que** le premier paramètre environnemental comprend un paramètre d'isolation thermique, et ledit paramètre d'isolation thermique sert à indiquer un paramètre environnemental relatif à une situation dans laquelle une condition d'isolation thermique est maintenue dans la zone cible,
avant que le module de détermination (31) ne détermine le premier paramètre environnemental de la zone cible, le module de traitement (32) est en outre conçu pour :
charger la cellule cible jusqu'à ce que chaque cellule cible soit dans un état de charge complète,
déterminer une pluralité de premiers points de mesure associés à la cellule cible, et
le premier point de mesure servant à obtenir un paramètre de température de chaque cellule cible, et
une manière spécifique selon laquelle le module de traitement (32) réalise la première opération d'emballement thermique sur la cellule cible en fonction du premier paramètre environnemental jusqu'à ce que le phénomène d'emballement thermique se produise dans la cellule cible après que le module de détermination (31) a déterminé le premier paramètre environnemental de la zone cible comprend :
la détermination du premier paramètre environnemental de la zone cible, et la réalisation de la première opération d'emballement thermique sur la cellule cible en fonction du premier paramètre environnemental,
la détermination du fait que le phénomène d'emballement thermique se produit ou non dans la cellule cible en fonction du paramètre de température correspondant à chaque premier point de mesure, et
si le phénomène d'emballement thermique ne se produit pas dans la cellule cible, l'ajustement du premier paramètre environnemental en fonction d'un gradient de variation de paramètre environnemental prédéfini jusqu'à ce que le phénomène d'emballement thermique se produise dans la cellule cible.

6. Dispositif selon la revendication 5, dans lequel le premier paramètre d'état comprend au moins l'un des suivants : la température de surface de cellule, le courant de charge et la tension de cellule, le modèle de production de chaleur cible comprend un modèle de surcharge cible, et une manière spécifique selon laquelle le module de traitement (32) détermine le modèle de production de chaleur cible correspondant à chaque cellule cible en fonction du premier paramètre d'état comprend :
l'établissement d'un modèle de surcharge de cellule unique correspondant à chaque cellule cible en fonction du premier paramètre d'état, et la détermination d'un troisième paramètre d'état dans chaque modèle de surcharge de cellule unique,
le modèle de surcharge de cellule unique comprenant un modèle de production de chaleur par réaction électrochimique et un modèle de production de chaleur par réaction de décomposition, et
l'optimisation de chaque troisième paramètre d'état pour obtenir un paramètre d'état cible, et la détermination du modèle de surcharge cible correspondant à chaque cellule cible en fonction du paramètre d'état cible et de chaque modèle de surcharge de cellule unique.

7. Dispositif selon la revendication 6, dans lequel une manière spécifique selon laquelle le module de traitement (32) optimise chaque troisième paramètre d'état pour obtenir le paramètre d'état cible comprend :
la détermination d'une limite cible et d'un ordre de grandeur cible de chaque troisième paramètre d'état,
la détermination d'un gradient de variation de paramètre d'état correspondant à chaque troisième paramètre d'état en fonction de l'ordre de grandeur cible de chaque troisième paramètre d'état,
l'ajustement de chaque troisième paramètre d'état dans la limite cible en fonction du gradient de variation de paramètre d'état correspondant à chaque troisième paramètre d'état,
pour différentes valeurs de chaque troisième paramètre d'état, la détermination d'une valeur mesurée de la température de surface de cellule correspondant à chaque cellule cible, et une valeur calculée de la température de surface de cellule correspondant à chaque cellule cible calculée selon le modèle de surcharge de cellule unique,
la détermination d'une première température initiale d'emballement thermique en fonction de la valeur mesurée, la détermination d'une deuxième température initiale d'emballement thermique en fonction de la valeur calculée, la détermination d'une différence de température initiale d'emballement thermique en fonction de la première température initiale d'emballement thermique et de la deuxième température initiale d'emballement thermique, et la détermination d'une somme des carrés de la différence en fonction de la valeur mesurée et de la valeur calculée, et
la détermination de valeurs de paramètre candidates du troisième paramètre d'état, pour autant que la somme des carrés de la différence soit inférieure à un seuil prédéfini de la somme des carrés et/ou que la différence de température initiale d'emballement thermique soit inférieure à un seuil de différence prédéfini, et la détermination du paramètre d'état cible à partir des valeurs de paramètre candidates.

8. Dispositif selon la revendication 6, dans lequel une manière spécifique selon laquelle le module de traitement (32) établit le modèle structurel du bloc-batterie cible et réalise la deuxième opération d'emballement thermique sur le modèle structurel comprend :
la détermination d'une structure de composants électriques et d'une structure de composants mécaniques du bloc-batterie cible, et l'établissement du modèle structurel du bloc-batterie cible en fonction de la structure de composants électriques et de la structure de composants mécaniques,
la structure de composants électriques comprenant une structure de cellules et une structure de banc de connexion,
l'établissement d'un premier modèle de production de chaleur correspondant à la structure de cellules selon le modèle de surcharge cible de chaque cellule cible, la détermination d'une quantité de production de chaleur ohmique correspondant à la structure de banc de connexion et l'établissement d'un deuxième modèle de production de chaleur, et la détermination d'un coefficient de transfert de chaleur par convection et d'une émissivité de rayonnement correspondant à la structure de composants mécaniques, et l'établissement d'un troisième modèle de production de chaleur, et
la réalisation d'une simulation de surcharge sur le modèle structurel en fonction d'un temps de charge cible et d'un courant de charge cible pour réaliser la deuxième opération d'emballement thermique, et la détermination d'une condition d'emballement thermique,
la condition d'emballement thermique étant associée au premier modèle de production de chaleur, au deuxième modèle de production de chaleur et au troisième modèle de production de chaleur et servant à indiquer une condition physique thermique correspondante selon laquelle la sécurité du bloc-batterie cible satisfait une exigence de sécurité prédéfinie.

9. Support de stockage lisible par ordinateur, sur lequel sont stockées des instructions d'exécution informatique ; un processeur, lors de l'exécution des instructions d'exécution informatique, étant conçu pour :
déterminer un premier paramètre environnemental d'une zone cible,
réaliser une première opération d'emballement thermique sur une cellule cible en fonction du premier paramètre environnemental jusqu'à ce qu'un phénomène d'emballement thermique se produise dans la cellule cible, et obtenir un premier paramètre d'état de la cellule cible pendant la première opération d'emballement thermique,
déterminer un modèle de production de chaleur cible correspondant à chaque cellule cible en fonction du premier paramètre d'état, ledit modèle de production de chaleur cible servant à indiquer la quantité de production de chaleur de chaque cellule cible sous un paramètre de fonctionnement prédéfini,
établir un modèle structurel d'un bloc-batterie cible, réaliser une deuxième opération d'emballement thermique sur le modèle structurel, et déterminer un deuxième paramètre d'état de chaque cellule cible en fonction de chaque modèle de production de chaleur cible au cours de la deuxième opération d'emballement thermique, et
déterminer la sécurité du bloc-batterie cible en fonction du deuxième paramètre d'état, ledit deuxième paramètre d'état servant à indiquer une condition d'emballement thermique de chaque cellule cible ;
**caractérisé en ce que** le premier paramètre environnemental comprend un paramètre d'isolation thermique, et ledit paramètre d'isolation thermique sert à indiquer un paramètre environnemental relatif à une situation dans laquelle une condition d'isolation thermique est maintenue dans la zone cible,
avant de déterminer le premier paramètre environnemental de la zone cible, le processeur est en outre conçu pour :
charger la cellule cible jusqu'à ce que chaque cellule cible soit dans un état de charge complète,
déterminer une pluralité de premiers points de mesure associés à la cellule cible, et
le premier point de mesure servant à obtenir un paramètre de température de chaque cellule cible, et
une manière spécifique selon laquelle le processeur réalise la première opération d'emballement thermique sur la cellule cible en fonction du premier paramètre environnemental jusqu'à ce que le phénomène d'emballement thermique se produise dans la cellule cible après avoir déterminé le premier paramètre environnemental de la zone cible comprend :
la détermination du premier paramètre environnemental de la zone cible, et la réalisation de la première opération d'emballement thermique sur la cellule cible en fonction du premier paramètre environnemental,
la détermination du fait que le phénomène d'emballement thermique se produit ou non dans la cellule cible en fonction du paramètre de température correspondant à chaque premier point de mesure, et
si le phénomène d'emballement thermique ne se produit pas dans la cellule cible, l'ajustement du premier paramètre environnemental en fonction d'un gradient de variation de paramètre environnemental prédéfini jusqu'à ce que le phénomène d'emballement thermique se produise dans la cellule cible.

10. Support de stockage lisible par ordinateur selon la revendication 9, dans lequel le premier paramètre d'état comprend au moins l'un des suivants : la température de surface de cellule, le courant de charge et la tension de cellule, le modèle de production de chaleur cible comprend un modèle de surcharge cible, et une manière spécifique selon laquelle le processeur détermine le modèle de production de chaleur cible correspondant à chaque cellule cible en fonction du premier paramètre d'état comprend :
l'établissement d'un modèle de surcharge de cellule unique correspondant à chaque cellule cible en fonction du premier paramètre d'état, et la détermination d'un troisième paramètre d'état dans chaque modèle de surcharge de cellule unique,
le modèle de surcharge de cellule unique comprenant un modèle de production de chaleur par réaction électrochimique et un modèle de production de chaleur par réaction de décomposition ; et
l'optimisation de chaque troisième paramètre d'état pour obtenir un paramètre d'état cible, et la détermination du modèle de surcharge cible correspondant à chaque cellule cible en fonction du paramètre d'état cible et de chaque modèle de surcharge de cellule unique.

11. Support de stockage lisible par ordinateur selon la revendication 10, dans lequel une manière spécifique selon laquelle le processeur optimise chaque troisième paramètre d'état pour obtenir le paramètre d'état cible comprend :
la détermination d'une limite cible et d'un ordre de grandeur cible de chaque troisième paramètre d'état,
la détermination d'un gradient de variation de paramètre d'état correspondant à chaque troisième paramètre d'état en fonction de l'ordre de grandeur cible de chaque troisième paramètre d'état,
l'ajustement de chaque troisième paramètre d'état dans la limite cible en fonction du gradient de variation de paramètre d'état correspondant à chaque troisième paramètre d'état,
pour différentes valeurs de chaque troisième paramètre d'état, la détermination d'une valeur mesurée de la température de surface de cellule correspondant à chaque cellule cible, et une valeur calculée de la température de surface de cellule correspondant à chaque cellule cible calculée selon le modèle de surcharge de cellule unique,
la détermination d'une première température initiale d'emballement thermique en fonction de la valeur mesurée, la détermination d'une deuxième température initiale d'emballement thermique en fonction de la valeur calculée, la détermination d'une différence de température initiale d'emballement thermique en fonction de la première température initiale d'emballement thermique et de la deuxième température initiale d'emballement thermique, et la détermination d'une somme des carrés de la différence en fonction de la valeur mesurée et de la valeur calculée, et
la détermination de valeurs de paramètre candidates du troisième paramètre d'état, pour autant que la somme des carrés de la différence soit inférieure à un seuil prédéfini de la somme des carrés et/ou que la différence de température initiale d'emballement thermique soit inférieure à un seuil de différence prédéfini, et la détermination du paramètre d'état cible à partir des valeurs de paramètre candidates.

12. Support de stockage lisible par ordinateur selon la revendication 10, dans lequel une manière spécifique selon laquelle le processeur établit le modèle structurel du bloc-batterie cible et réalise la deuxième opération d'emballement thermique sur le modèle structurel comprend :
la détermination d'une structure de composants électriques et d'une structure de composants mécaniques du bloc-batterie cible, et l'établissement du modèle structurel du bloc-batterie cible en fonction de la structure de composants électriques et de la structure de composants mécaniques,
la structure de composants électriques comprenant une structure de cellules et une structure de banc de connexion,
l'établissement d'un premier modèle de production de chaleur correspondant à la structure de cellules selon le modèle de surcharge cible de chaque cellule cible, la détermination d'une quantité de production de chaleur ohmique correspondant à la structure de banc de connexion et l'établissement d'un deuxième modèle de production de chaleur, et la détermination d'un coefficient de transfert de chaleur par convection et d'une émissivité de rayonnement correspondant à la structure de composants mécaniques, et l'établissement d'un troisième modèle de production de chaleur, et
la réalisation d'une simulation de surcharge sur le modèle structurel en fonction d'un temps de charge cible et d'un courant de charge cible pour réaliser la deuxième opération d'emballement thermique, et la détermination d'une condition d'emballement thermique,
la condition d'emballement thermique étant associée au premier modèle de production de chaleur, au deuxième modèle de production de chaleur et au troisième modèle de production de chaleur et servant à indiquer une condition physique thermique correspondante selon laquelle la sécurité du bloc-batterie cible satisfait une exigence de sécurité prédéfinie.
